# EUROPÄISCHE PATENTSCHRIFT

(11) **EP 4 118 399 B1**
(45) Veröffentlichungstag und Bekanntmachung des Hinweises auf die Patenterteilung: **16.07.2025**
(21) Anmeldenummer: 21711502.1
(22) Anmeldetag: 08.03.2021
(51) Int. Cl.: G01D 11/30

(54) **SENSORBAUGRUPPE MIT SICHERUNGSFORMATION**
SENSOR ASSEMBLY WITH A SECURING FORMATION
ENSEMBLE CAPTEUR DOTÉ D'UNE FORMATION DE FIXATION

(30) Priorität: 12.03.2020 DE 102020106829
(43) Veröffentlichungstag der Anmeldung: 18.01.2023
(73) Patentinhaber: Hamilton Bonaduz AG, 7402 Bonaduz (CH)
(72) Erfinder: GAUPP, Theo, 7204 Untervaz (CH)
(74) Vertreter: Ruttensperger Lachnit Trossin Gomoll
(86) Internationale Anmeldenummer: PCT/EP2021/055790
(87) Internationale Veröffentlichungsnummer: WO 2021/180654

(56) Entgegenhaltungen:
- DE-A1- 102006 001 610
- DE-U1- 202011 109 319
- JP-A- 2008 224 366
- US-A1- 2012 255 356
- US-A1- 2016 003 649

## Beschreibung

Die vorliegende Erfindung betrifft eine Sensorbaugruppe, umfassend wenigstens drei gesondert voneinander ausgebildete Bauteile, nämlich ein sich längs einer Sensorachse erstreckendes Sensorgehäuse mit einem darin aufgenommenen Sensor, eine Sensorhalterung und einen Sensorträger, wobei das Sensorgehäuse in einem für einen Erfassungsbetrieb des Sensors bereiten Bezugszustand der Sensorbaugruppe unter Zwischenanordnung der Sensorhalterung am Sensorträger gehaltert ist, wobei die Sensorhalterung einen Rohrabschnitt mit einem Außengewinde aufweist, welches mit einem Innengewinde des Sensorträgers längs einer Schraubachse in Schraubeingriff ist, wobei die Schraubachse eine längs der Schraubachse verlaufende axiale Richtung, orthogonal zur Schraubachse verlaufende radiale Richtungen und eine um die Schraubachse herum verlaufende Umfangsrichtung definiert, wobei der Rohrabschnitt das Sensorgehäuse in Umfangsrichtung umgibt.

Eine Sensorbaugruppe mit diesen Merkmalen ist aus der JP 2008-224366 A bekannt und dient der Anbringung eines thermisch hochbelasteten Sensors in einem Abgasstrang eines Kraftfahrzeugs. Zum Schutz gegen ein Festfressen des Schraubeingriffs zwischen Sensorhalterung und dem Abgasrohr als Sensorträger ist wenigstens das Außengewinde des Sensorträgers mit einer intermetallischen Eisen-Aluminium-Verbundlage beschichtet. Diese Beschichtung dient dem erleichterten Lösen des Sensorhalters vom Abgasrohr nach längerem Betrieb unter schwellender thermischer Belastung.

Eine derartige Sensorbaugruppe wird im Stand der Technik beispielsweise auch dazu verwendet, einen Sensor in einer Behälterwand derart anzuordnen, dass der Sensor auf einer Seite der Behälterwand bestimmungsgemäß erfassen kann und dass die Erfassungssignale des Sensors auf der jeweils anderen Seite der Behälterwand abgreifbar sind. Die Behälterwand bildet in diesem Fall, ebenso wie in einem bevorzugten Anwendungsfall der vorliegenden Erfindung, den Sensorträger. Im Falle der zuvor genannten JP 2008-224366 A ist das Abgasrohr der "Behälter".

Im Stand der Technik weist das Sensorgehäuse ein Sensor-Außengewinde auf, mittels welchem das Sensorgehäuse in ein entsprechendes Innengewinde der Sensorhalterung eingeschraubt wird. Das Sensor-Außengewinde und folglich auch das Innengewinde der Sensorhalterung sind Feingewinde.

Nach Durchführung der Erfassungsaufgabe wird der Sensor aus der Sensorhalterung entfernt. Häufig sind der Behälter als der Sensorträger und die Sensorhalterung nur für einen einmaligen Gebrauch bestimmt, etwa um Kreuzkontaminationen unter Beteiligung eines im Behälter aufgenommenen Mediums zu vermeiden. Der gegenüber diesen Wegwerf-Bauteilen wertvollere und teurere Sensor wird dagegen wiederverwendet. Dies ist auch deshalb möglich, weil die Sensorhalterung das Sensorgehäuse vollständig gegen den Innenraum des Behälters abschirmt.

Zwar kann durch Einhalten der vorgeschriebenen Montage-Drehmomente die bekannte Sensorbaugruppe problemlos auseinandergebaut werden, insbesondere der Sensor aus der mit dem Sensorträger verschraubten Sensorhalterung entfernt werden. Jedoch halten Benutzer häufig die vorgegebenen Drehmomente nicht ein, sei es weil sie keinen passenden Drehmomentschlüssel zur Hand haben oder sei es, weil sie die Komplexität der nur aus Schraubbewegungen bestehenden Montage und Demontage unterschätzen und entsprechende Anleitungen gar nicht erst studieren.

Dann, wenn vorgegebene Montage-Drehmomente nicht eingehalten werden, kann es bei der Demontage zu unbestimmten Relativbewegungen kommen. Üblicherweise wird ein Lösedrehmoment unmittelbar in das Sensorgehäuse eingeleitet, da in der Regel nur dieses von außerhalb des Behälters zugänglich ist. Die Sensorhalterung ist nämlich in der Regel vom Behälterinnenraum aus in das Innengewinde der Behälterwand einschraubt. Ein von der Sensorhalterung nach radial außen vorstehender Anschlagkragen bildet einen Endanschlag, welcher die Einschraubtiefe der Sensorhalterung in die Behälterwand körperlich begrenzt. Kommt es nun anstelle der gewünschten Relativbewegung zwischen Sensorgehäuse und Sensorhalterung zu einer unerwünschten Relativbewegung zwischen Sensorhalterung und Sensorträger, weil sich Sensorgehäuse und Sensorhalterung wie ein einziges Bauteil verhalten, wird durch die eingeleitete Schraubbewegung das Sensorgehäuse gemeinsam mit der Sensorhalterung Richtung Behälterinnenraum gelöst, wobei der Anschlagkragen am Sensorgehäuse verhindert, dass das Sensorgehäuse aus der das Innengewinde zur Aufnahme der Sensorhalterung aufweisenden Durchgangsöffnung in der Behälterwand herausgezogen werden kann. Zur Bergung des Sensors muss dann entweder das Sensorgehäuse wieder in das Innengewinde eingedreht werden, sodass ein neuer Demontageversuch gestartet werden kann, oder es muss der Behälterinnenraum zugänglich gemacht werden, um die Sensorhalterung vom Sensorgehäuse zu trennen. Ersteres bedeutet einen erheblich erhöhten Montageaufwand mit ungewissem Erfolg. Letzteres bedeutet ein erheblich erhöhtes Kontaminationsrisiko in der Umgebung des Behälters.

Aus der DE 20 2011 109 319 U1 ist eine schraubbare Klemmvorrichtung zum kraftschlüssigen Festlegen von zylindrischen Bauteilen bekannt. Ein inneres Halterohr weist an seinem Längsende durch axial verlaufende Materialschwächungen in Umfangsrichtung voneinander getrennte blattfederartige Gewindeträger auf, an deren radialer Außenseite ein Außengewinde ausgebildet ist und deren nach radial innen weisende Flächen als Klemmflächen zur Anlage an dem festzulegenden zylindrischen Bauteil ausgebildet sind. Durch Aufschrauben einer Überwurfmutter mit Innengewinde auf das Längsende mit den blattfederartigen Gewindeträgern können die blattfederartige Gewindeträger nach radial innen in kraftschlüssigen Anlageeingriff mit dem radial innerhalb des Halterohrs angeordneten zylindrischen Bauteils gedrängt werden.

Zum weiteren technologischen Hintergrund wird auf die Druckschriften DE 10 2006 001 610 A, US 2016/003649 A1 und US 2012/255356 A1 verwiesen.

Es ist daher Aufgabe der vorliegenden Erfindung, die eingangs genannte Sensorbaugruppe dahingehend zu verbessern, dass das Sensorgehäuse möglichst unabhängig von einzuhaltenden Anzugs- oder/und Lösemomenten bzw. Montage- oder/und Demontagekräften in einen betriebsbereiten Zustand sicher montierbar und ausgehend von einem betriebsbereiten Zustand sicher demontierbar ist.

Diese Aufgabe löst die vorliegende Erfindung durch eine Sensorbaugruppe mit den Merkmalen des Anspruchs 1. Die eingangs genannte Sensorbaugruppe ist erfindungsgemäß dadurch weitergebildet, dass wenigstens ein Gewinde aus dem Außengewinde der Sensorhalterung und dem Innengewinde des Sensorträgers als Sicherungsgewinde in wenigstens einem Umfangsabschnitt einer Gewindenut eine Löse-Sicherungsformation aufweist, wobei die Löse-Sicherungsformation, bezogen auf einen von der Löse-Sicherungsformation freien Umfangsabschnitt der Gewindenut, die Querschnittsfläche der Gewindenut lokal in dem wenigstens einem Umfangsabschnitt verringert.

Mit "Sicherungsgewinde" ist dabei jenes Gewinde aus Außengewinde der Sensorhalterung und Innengewinde des Sensorträgers bezeichnet, welches die Löse-Sicherungsformation aufweist.

Mit "Löse-Sicherungsformation" ist in der vorliegenden Anmeldung eine Formation am Sicherungsgewinde bezeichnet, welche ihrer Funktion nach einen Schraubeingriff zwischen dem Außengewinde und dem Innengewinde gegen ein Lösen sichert. Die Löse-Sicherungsformation bewirkt wenigstens eine Erhöhung des zum Lösen des Schraubeingriffs zwischen dem Außengewinde und dem Innengewinde erforderlichen Drehmoments, verglichen mit einem Schraubeingriff derselben Gewinde ohne Löse-Sicherungsformation.

In der Technik ist mit dem Begriff "Gewinde" üblicherweise die wendelförmige Nut bezeichnet, die, abhängig von der Gewindeart, am Außenumfang oder am Innenumfang einer in der Regel zylindrischen oder geringfügig konischen Fläche zur Herstellung eines Schraubeingriffs gebildet ist. Da in der vorliegenden Anmeldung einzelne Abschnitte eines Gewindes voneinander zu unterscheiden sind, ist die wendelförmige Nut eines Gewindes in der vorliegenden Anmeldung als "Gewindenut" bezeichnet. Die Gewindenut wird axial, bezogen auf die Schraubachse eines Gewindes, zu beiden Seiten von aufeinander zuweisenden Gewindeflanken begrenzt. Voneinander wegweisende Gewindeflanken einander axial unmittelbar benachbarter Gewindenut-Windungen bilden gemäß der in der vorliegenden Anmeldung benutzten Terminologie einen "Gewindevorsprung". Ein n-gängiges Gewinde weist daher genau n Gewindenuten und n Gewindevorsprünge auf, wobei n eine ganze Zahl ist und wobei eine Gewindenut-Windung eines Gewindegangs zwischen zwei axial unmittelbar benachbarten Gewindevorsprung-Windungen desselben Gewindegangs gebildet ist und umgekehrt.

Die aufeinander zuweisenden Gewindeflanken einer Gewindenut sind an einem radialen Endbereich durch einen Nutgrund miteinander verbunden. Die voneinander wegweisenden Gewindeflanken eines Gewindevorsprungs desselben Gewindes sind am entgegengesetzten radialen Endbereich durch einen Gewindescheitel miteinander verbunden.

Bei der Herstellung eines Schraubeingriffs zwischen dem Außengewinde der Sensorhalterung und dem Innengewinde des Sensorträgers greift ein komplementärer Gewindevorsprung des Innengewindes in eine Gewindenut des Außengewindes ein und umgekehrt. "Komplementär" bedeutet dabei nicht notwendigerweise, dass ein Gewindevorsprung des einen Gewindes die Gewindenut des anderen Gewindes, in die er eingreift, vollständig ausfüllt. Dies ist wegen der dann bestehenden großen Anlageflächen von Gewindevorsprung und Gewindenut aneinander und des daraus resultierenden hohen zu überwindenden Reibmoments nicht einmal erwünscht. Vielmehr soll "komplementär" bedeuten, dass der Gewindevorsprung und die Gewindenut derart passend gestaltet sind, dass zwischen ihnen ein spielfreier Schraubeingriff herstellbar und wieder lösbar ist.

Durch Vorsehen der Löse-Sicherungsformation an wenigstens einem der genannten Gewinde wird lokal im Anordnungsbereich der Löse-Sicherungsformation der Eingriffsraum für den komplementären Gewindevorsprung in der Gewindenut verringert, sodass es beim Herstellen des Schraubeingriffs im Anordnungsbereich der Löse-Sicherungsformation allgemein zu einer Materialverdrängung kommt, welche Drehmoment erhöhend wirkt und somit die gewünschte Lösesicherung des einmal hergestellten Schraubeingriffs bewirkt.

Da eine Gewindenut in einer bezüglich ihrer zugeordneten Schraubachse von ihrem Nutgrund weg weisenden radialen Richtung offen ist, sei klargestellt, dass die Querschnittsfläche eines Gewindenutabschnitts jene Fläche in einer die Schraubachse des betrachteten Gewindenutabschnitts enthaltenen Schnittebene ist, welche in beiden entgegengesetzten axialen Richtungen durch die aufeinander zuweisenden Gewindeflanken und in beiden entgegengesetzten radialen Richtungen einmal durch den Nutgrund sowie ein weiteres Mal durch eine virtuelle Schmiegefläche, insbesondere einen virtuellen Schmiegezylinder, an die axial beiderseits des Gewindenutabschnitts verlaufenden Gewindescheitelabschnitte begrenzt ist. Eine virtuelle Schmiegefläche liegt dabei als Tangentialfläche an einem körperlichen Abschnitt berührend an ohne diesen zu durchdringen.

Wenngleich grundsätzlich nicht ausgeschlossen sein soll, dass sowohl das Außengewinde der Sensorhalterung als auch das Innengewinde des Sensorträgers je wenigstens eine Löse-Sicherungsformation aufweisen können, ist zur Erleichterung einer Herstellung eines Schraubeingriffs zwischen den genannten Gewinden die Ausbildung der wenigstens einen Löse-Sicherungsformation an nur einem der genannten Gewinde bevorzugt. Von der bevorzugten Ausbildung der wenigstens einen Löse-Sicherungsformation an nur einem der genannten Gewinde wird bei der nachfolgenden Beschreibung der vorliegenden Erfindung ausgegangen.

Die oben genannte Materialverdrängung zur Erzielung der gewünschten betragsmäßigen Erhöhung des zum Lösen der Schraubverbindung zwischen Sensorhalterung und Sensorträger erforderlichen Drehmoments kann auf unterschiedlichen Wechselwirkungen der Löse-Sicherungsformation mit dem zum Sicherungsgewinde komplementären Gewinde beruhen. Die Wechselwirkungen lassen sich in drei grundsätzliche Kategorien unterteilen: erstens kann der komplementäre Gewindevorsprung Material der Löse-Sicherungsformation am Sicherungsgewinde verdrängen.

Zweitens kann die Löse-Sicherungsformation Material des komplementären Gewindevorsprungs verdrängen. Drittens kann eine wechselseitige Verdrängung sowohl von Material der Löse-Sicherungsformation als auch von Material des komplementären Gewindevorsprungs erfolgen.

Um eine möglichst definierte Materialverdrängung zu erhalten, ist es bevorzugt, wenn eine Formation aus der Löse-Sicherungsformation und einem Gewindevorsprungsabschnitt des mit dem Sicherungsgewinde in Schraubeingriff stehenden anderen Gewindes aus Außengewinde der Sensorhalterung und Innengewinde des Sensorträgers, welcher Gewindevorsprungsabschnitt im Bezugszustand der Sensorbaugruppe im Umfangserstreckungsbereich und im Axialerstreckungsbereich der Löse-Sicherungsformation gelegen ist, härter oder/und steifer ausgebildet ist als die jeweils andere Formation. Härte ist dabei Widerstand gegen ein Eindringen in eine Oberfläche eines Materials. Steifigkeit ist Widerstand gegen eine Verformung, wobei hier ein Widerstand gegen eine Druckverformung, also eine Drucksteifigkeit, von besonderem Interesse ist. Die Drucksteifigkeit eines Materials ist proportional zum Elastizitätsmodul des Materials. Seine Bauteilsteifigkeit von der Gestalt des Bauteilabschnitts abhängig.

Bevorzugt ist der Sensorträger, da es sich dabei gemäß einer vorteilhaften Weiterbildung der Erfindung um eine Behälterwanderung handelt, etwa eines Reaktorbehälters, insbesondere Bio-Reaktorbehälters, aus Stahl, vorzugsweise aus nichtrostendem Stahl gebildet. Der Sensorträger kann beispielsweise ein Fermentationscontainer sein. Der Sensorträger kann beispielsweise aus Kunststoff sein, vorzugsweise aus Polycarbonat. Die Sensorhalterung ist bevorzugt ein Spritzgussbauteil und damit überwiegend oder vollständig aus thermoplastischem Kunststoff gebildet.

Dann, wenn wenigstens der im Bezugszustand im selben Umfangs- und Axialabschnitt wie die Löse-Sicherungsformation angeordneter Gewindevorsprungsabschnitt des komplementären Gewindes, vorzugsweise sein gesamter Gewindevorsprung, eine höhere Härte oder/und eine höhere Steifigkeit als die Löse-Sicherungsformation aufweist, kann der Gewindevorsprung des komplementären Gewindes Material der Löse-Sicherungsformation verdrängen. Bevorzugt ist der Gewindevorsprung des komplementären Gewindes zu seinem Gewindescheitel hin verjüngt ausgebildet, wobei zur Erzielung vorteilhaft hoher Keilkräfte der Gewindescheitel ein linienhafter Gewindescheitel bevorzugt ist, sodass der Gewindevorsprung als eine Art wendelförmige Schneide in das Material der Löse-Sicherungsformation einschneiden kann. Zum einen führt dies wegen des während der Schraubbewegung erzielten ziehenden Schnitts zu vorteilhafterweise nur moderat erhöhten Drehmomenten. Zum anderen liegen die durch den Schnitt getrennten Anteile der Löse-Sicherungsformation axial beiderseits mit Druck an den Nutflanken des Gewindevorsprungs an und erhöhen so dauerhaft und in beide entgegengesetzte Drehrichtungen das zum Herstellen und Lösen des Schraubeingriffs notwendige Drehmoment.

Dann, wenn die Löse-Sicherungsformation härter oder/und steifer ausgebildet ist als der Gewindevorsprungsabschnitt, kann die Löse-Sicherungsformation eine Ausnehmung in den Gewindevorsprung des komplementären Gewindes eindrücken. Hierzu ist es vorteilhaft, wenn die Löse-Sicherungsformation wenigstens eine quer zum Gewindescheitel des Gewindevorsprungs des komplementären Gewindes verlaufende Kante ausbildet. Diese Kante kann ebenfalls wie eine Schneide wirken, welche vom Gewindescheitel des Gewindevorsprungs des komplementären Gewindes her in den Gewindevorsprung einschneidet oder eindrückt. In der Regel dringt die Löse-Sicherungsformation körperlich in die durch Materialverdrängung im Gewindevorsprung geschaffene Kerbe, bzw. allgemein Ausnehmung, ein und sorgt so für einen Formschlusseingriff mit dem Gewindevorsprung des komplementären Gewindes, welcher eine lösende Schraubbewegung des Sicherungsgewindes relativ zum komplementären Gewinde hemmt oder wenigstens erschwert.

Dann, wenn die Nutflanken des Gewindevorsprungs des komplementären Gewindes einen betragsmäßig kleinen Keilwinkel bilden und gleichzeitig die Löse-Sicherungsformation eine stabile Kante aufweist, welche im Erstreckungsbereich der Löse-Sicherungsformation quer zum Gewindescheitel des komplementären Gewindes verläuft, wobei die beiderseits an die Kante angrenzenden Grenzflächen der Löse-Sicherungsformation einen betragsmäßig größeren Keilwinkel einschließen als der Gewindevorsprung, kann die Löse-Sicherungsformation selbst dann eine Ausnehmung von dem Gewindescheitel her in den Gewindevorsprung eindrücken, wenn der Gewindevorsprung des komplementären Gewindes aus einem härteren oder/und steiferen Material gebildet ist als die Löse-Sicherungsformation. Die Gestalten der wechselwirkenden Formationen: Löse-Sicherungsformation und Gewindevorsprung, können dann in gewissen Grenzen entscheidender sein als das jeweilige Material. Möglicherweise findet dann eine wechselseitige Verformung und Materialverdrängung statt. Vorteilhaft ist jedoch, dass mit dem Eindrücken einer Kerbe in den Gewindevorsprung und mit dem wenigstens teilweisen Verbleib der Löse-Sicherungsformation in der durch sie selbst gebildeten Kerbe eine effektive, weil formschlüssige Lösesicherung der Sensorhalterung am Sensorträger erreicht ist.

Da sich im Laufe einer Materialverdrängung die Kraftverhältnisse am Verdrängungsort ändern, etwa weil mit zunehmender Menge des verdrängten Materials die zur weiteren Verdrängung notwendigen Kräfte und Drehmomente betragsmäßig stark ansteigen, kann es beim Verschrauben des Sicherungsgewindes mit dem komplementären Gewinde zu einer Mischform der beiden oben genannten Verformungen kommen, sodass sowohl die Löse-Sicherungsformation als auch der Gewindevorsprung des komplementären Gewindes verformt werden.

Zum einen kann, wie oben beschrieben, die Löse-Sicherungsformation selbst verformt werden. Dann jedoch, wenn eine Lösesicherung hauptsächlich durch eine Verformung des Gewindevorsprungs des komplementären Gewindes erzielt werden soll, kann in einem Schwächungsbereich der Sensorhalterung eine Materialschwächung ausgebildet sein, um dafür zu sorgen, dass die Löse-Sicherungsformation zunächst beim Herstellen der Schraubverbindung möglichst lange unverformt bleibt. Da die Löse-Sicherungsformation aufgrund der durch sie bewirkten Verringerung der Querschnittsfläche der sie aufweisenden Gewindenut beim Herstellen der Schraubverbindung in der Regel in Kontakt mit dem Gewindevorsprung des komplementären Gewindes gelangt, ist es vorteilhaft, wenn die Materialschwächung im Bereich des Außengewindes ausgebildet ist. Der Schwächungsbereich, der zur Ausbildung der Materialschwächung bevorzugt infrage kommt, enthält daher bevorzugt das gesamte Außengewinde und reicht axial, bezogen auf eine Schraubachse des Außengewindes, beiderseits des Außengewindes wenigstens das Doppelte der Gewindesteigung des Außengewindes über das Außengewinde hinaus. Wird die Materialschwächung in diesem Schwächungsbereich ausgebildet, kann die Steifigkeit des das Außengewinde tragenden Rohrabschnitts verringert werden, sodass ein Kontakt zwischen der Löse-Sicherungsformation und dem Gewindevorsprung zunächst eine ausweichende Verformung des Rohrabschnitts in radialer Richtung zur virtuellen Schraubachse hin bewirken kann. So kann eine frühzeitige Verformung des Gewindevorsprungs durch die Löse-Sicherungsformation schon beim Herstellen des Schraubeingriffs und damit eine unerwünschte Erhöhung des zur Herstellung des Schraubeingriffs notwendigen Drehmoments verhindert werden.

Gemäß einer bevorzugten konstruktiven Ausgestaltung der Sensorhalterung kann die Materialschwächung eine in einer Oberfläche der Sensorhalterung ausgebildete konkave Vertiefung umfassen, welche sich in Dickenrichtung ausgehend von der Oberfläche in die Sensorhalterung hinein erstreckt, wobei die Materialschwächung eine in einer zur Dickenrichtung orthogonalen Breitenrichtung zu messende Breite aufweist, wobei die Materialschwächung längs einer sowohl zur Dickenrichtung als auch zur Breitenrichtung orthogonalen Verlaufsrichtung ihre größte Abmessung aufweist. Die Materialschwächung kann auf der dem Außengewinde entgegengesetzten Innenseite des Rohrabschnitts bzw. der Sensorhalterung ausgebildet sein, ist jedoch bevorzugt auf der das Außengewinde tragenden Außenseite des Rohrabschnitts ausgebildet.

Grundsätzlich kann es zur Verringerung der radialen Bauteilsteifigkeit des Rohrabschnitts bzw. der Sensorhalterung, also zur Verringerung des Widerstands gegen eine radiale Verformung bei vorgegebener radialer Belastung, ausreichen, wenn die Materialschwächung nur eine lokale Dünnstelle des Rohrabschnitts bzw. der Sensorhalterung bildet. Eine betragsmäßig besonders große lokale Verringerung der radialen Bauteilsteifigkeit kann dadurch erreicht werden, dass die Materialschwächung die Sensorhalterung in Dickenrichtung durchsetzt. Auch wenn die Materialschwächung als Perforation ausgebildet sein kann, in welcher sich in Verlaufsrichtung der Materialschwächung den Rohrabschnitt in Dickenrichtung durchsetzende Abschnitte mit nicht-durchsetzenden Abschnitten abwechseln, ist die Ausbildung der Materialschwächung als in Verlaufsrichtung kontinuierlich verlaufende, den Rohrabschnitt in Dickenrichtung durchsetzende Nut wegen der damit verbundenen erheblichen lokalen Verringerung der radialen Bauteilsteifigkeit bevorzugt.

Zur Bereitstellung ausreichender Rest-Bauteilsteifigkeit der Sensorhalterung und insbesondere ihres Rohrabschnitts, umfasst die Sensorhalterung und insbesondere der Rohrabschnitt bevorzugt axial beiderseits der Materialschwächung jeweils einen vollständig in Umfangsrichtung umlaufenden Bauteilabschnitt. Diese Bauteilabschnitte sind frei von der axial zwischen ihnen angeordneten Materialschwächung.

Die Verlaufsrichtung der Materialschwächung kann eine bezüglich der Schraubachse des Außengewindes axiale Komponente aufweisen. Sie kann sogar ausschließlich eine axiale Komponente aufweisen, sodass durch Wechselwirkung der Löse-Sicherungsformation mit dem Gewindevorsprung des komplementären Gewindes einer von zwei in Umfangsrichtung einander gegenüberliegenden Ränder einer rein axial verlaufenden Materialschwächung relativ zum jeweils anderen Rand nach radial innen zur Schraubachse hin einander verlagert werden kann. Um gewährleisten zu können, dass die Löse-Sicherungsformation beim Herstellen des Schraubeingriffs mit dem Sensorträger eine Verlagerung eines Bereichs des Rohrabschnitts bewirkt, ist gemäß einer Weiterbildung der vorliegenden Erfindung die wenigstens eine Löse-Sicherungsformation im Bezugszustand der Sensorbaugruppe im axialen Erstreckungsbereich der Materialschwächung angeordnet.

Zusätzlich oder bevorzugt alternativ kann die Verlaufsrichtung der Materialschwächung bezüglich der Schraubachse des Außengewindes eine Komponente in Umfangsrichtung aufweisen. Wiederum kann die Verlaufsrichtung nur in Umfangsrichtung verlaufen, sodass durch Wechselwirkung der Löse-Sicherungsformation mit dem Gewindevorsprung des komplementären Gewindes einer von zwei einander axial gegenüberliegenden Ränder einer rein in Umfangsrichtung verlaufenden Materialschwächung relativ zum jeweils anderen Rand radial nach innen zur Schraubachse hin verlagert werden kann. Aus den im vorhergehenden Absatz bereits genannten Gründen ist die wenigstens eine Löse-Sicherungsformation im Bezugszustand der Sensorbaugruppe bevorzugt im Umfangserstreckungsbereich der Materialschwächung angeordnet, um eine möglichst große Relativbewegung der beiden beiderseits der Materialschwächung gelegenen Bereiche der Sensorhalterung bewirken zu können.

Um die beschriebene radiale Verlagerung eines Bereichs des Rohrabschnitts beim Einschrauben der Sensorhalterung in den Sensor zu ermöglichen, wird das Sensorgehäuse bevorzugt erst in den Rohrabschnitt der Sensorhalterung eingeführt, wenn der Schraubeingriff zwischen Sensorhalterung und Sensorträger hergestellt ist. Dann kann der nach radial innen verlagerte Bereich des Rohrabschnitts durch das Sensorgehäuse zurück nach radial außen, also von der virtuellen Schraubachse weg, gedrängt werden.

Grundsätzlich kann die Löse-Sicherungsformation am Innengewinde oder an der das Innengewinde tragenden Innenwandung des Sensorträgers ausgebildet sein. Dann soll die Löse-Sicherungsformation gemäß der zuvor genannten vorteilhaften Weiterbildung der vorliegenden Erfindung in jenem Axialbereich oder/und Umfangsbereich des Innengewindes bzw. der Innenwandung angeordnet sein, in welchem im Bezugszustand die Materialschwächung der Sensorhalterung angeordnet ist. Die Sensorhalterung oder/und der Sensorträger können einen Endanschlag aufweisen, welcher die axiale Relativbewegung der Sensorhalterung beim Einschrauben in den Sensorträger begrenzt. Bevorzugt ist der Endanschlag als Radialvorsprung, besonders bevorzugt als in Umfangsrichtung umlaufender Radialvorsprung, an der Sensorhalterung ausgebildet. Bei gleicher Einschraubtiefe und bei Verwendung gleicher Bauteile, also Sensorhalterung einerseits und Sensorträger andererseits, kommt die Materialschwächung relativ zum Einschraubanfang des wenigstens einen Gewindegangs des Innengewindes des Sensorträgers im Bezugszustand stets im selben Axial- oder/und Umfangsbereich zu liegen. Durch Anordnung der Löse-Sicherungsformation axial oder/und in Umfangsrichtung relativ zum Einschraubanfang eines der am Schraubeingriff beteiligten Gewinde kann die gewünschte Anordnung der Löse-Sicherungsformation relativ zur Materialschwächung im Bezugszustand sichergestellt werden. Da die Sensorhalterung in der Regel stets von derselben Seite her und mit derselben Relativorientierung relativ zum Sensorträger in den Sensorträger eingeschraubt wird, ist sowohl am Außengewinde der Sensorhalterung als auch am Innengewinde des Sensorträgers klar, welches Längsende eines Gewindegangs der Einschraubanfang und welches entgegengesetzte Längsende das Einschraubende ist. Bei Beginn der Herstellung des Schraubeingriffs werden die beiden Einschraubanfänge der beteiligten Gewinde in Schraubeingriff gebracht und dann wird jeder Einschraubanfang durch Schraubbewegung in Richtung zum Einschraubende des jeweils anderen Gewindes bewegt.

Bevorzugt ist die Löse-Sicherungsformation unmittelbar an der die Materialschwächung tragenden Sensorhalterung ausgebildet, was die Erzielung der gewünschten Relativlage von Löse-Sicherungsformation und Materialschwächung erheblich erleichtert.

Wenngleich, wie oben dargelegt, eine rein axial oder rein in Umfangsrichtung verlaufende Materialschwächung bereits ausreichen kann, kann eine wesentlich deutlichere und gleichzeitig gezielt einstellbare Verringerung der radialen Steifigkeit des Rohrabschnitts bzw. der Sensorhalterung dadurch erhalten werden, dass sich die Verlaufsrichtung der in Verlaufsrichtung zusammenhängend ausgebildeten Materialschwächung längs ihres Verlaufs ändert, sodass die Materialschwächung einen Verformungsbereich der Sensorhalterung einfasst, wobei die wenigstens eine Löse-Sicherungsformation im Verformungsbereich angeordnet ist. Der Verformungsbereich kann so als Biegeverformungsbereich radial relativ zum übrigen Rohrabschnitt der Sensorhalterung durch Wechselwirkung der Löse-Sicherungsformation mit dem Gewindevorsprung des komplementären Gewindes wegen der im Anordnungsbereich der Löse-Sicherungsformation bewirkten Verringerung des Gewindenutquerschnitts des Sicherungsgewindes beim Herstellen des Schraubeingriffs zwischen Sensorhalterung und Sensorträger nach radial innen zur virtuellen Schraubachse hin verformend verlagert werden.

Grundsätzlich kann die Sensorachse im Bezugszustand bezüglich der Schraubachse geneigt sein. Zur Erzielung eines radial schlanken Gebildes aus Sensorgehäuse und Sensorhalterung ist die Sensorachse im Bezugszustand wenigstens parallel, bevorzugt koaxial zur Schraubachse.

Grundsätzlich kann die Löse-Sicherungsformation in beliebiger Weise die Querschnittsfläche der Gewindenut des Sicherungsgewindes verringern, indem sie in die Gewindenut einragt. Eine vorteilhaft stabile Löse-Sicherungsformation mit ausreichend vorhersagbarem Verhalten beim Herstellen des Schraubeingriffs kann dadurch erhalten werden, dass die Löse-Sicherungsformation in der Gewindenut des Sicherungsgewindes über einen vorbestimmten Umfangserstreckungsbereich eine, verglichen mit einem von einer Löse-Sicherungsformation freien Gewindenutabschnitt, geringere Gewindenuttiefe aufweist.

Die Löse-Sicherungsformation kann nachträglich in eine bereits hergestellte Gewindenut aufgetragen sein, was die Ausbildung der Löse-Sicherungsformation aus einem Material gestattet, welches vom Material des Sicherungsgewindes verschieden ist. Beispielsweise kann das Sicherungsgewinde aus Metall gebildet sein, in dessen Gewindenut eine Materialansammlung aus Kunststoff, insbesondere thermoplastischem Kunststoff, als Löse-Sicherungsformation aufgetragen sein kann. Aus Gründen einfacher Herstellbarkeit ist die Löse-Sicherungsformation vorzugsweise materialidentisch und einstückig mit dem Sicherungsgewinde ausgebildet. Als das Wegwerf-Bauteil, das die bevorzugt sowohl die Materialschwächung als auch die Löse-Sicherungsformation tragende Sensorhalterung in der Regel ist, ist wenigstens der Rohrabschnitt als Spritzgussbauteil ausgebildet. Das Spritzgussbauteil kann mit dem Sicherungsgewinde und mit der wenigstens einen Löse-Sicherungsformation spritzgusstechnisch einfach, kostengünstig und wiederholgenau hergestellt werden.

Da die Löse-Sicherungsformation ein Lösen des Schraubeingriffs, bevorzugt jedoch nicht ein Herstellen desselben wenigstens erschweren soll, kann die Löse-Sicherungsformation derart ausgebildet sein, dass sie beim Herstellen des Schraubeingriffs als eine Art Anlaufschräge wirkt. Hierzu kann in einer konkreten konstruktiven Ausgestaltung die Löse-Sicherungsformation einen Querschnittverringerungsabschnitt aufweisen, in welchem die Gewindenuttiefe im Umfangserstreckungsbereich längs des Gewindenutverlaufs in einem Einschraubsinn in Richtung von einem Einschraubanfang zu einem Einschraubende des Sicherungsgewindes bezüglich eines Einschraubvorgangs der Sensorhalterung in den Sensorträger stufenweise oder/und kontinuierlich abnimmt. Der Querschnittverringerungsabschnitt kann radial aus der Nut hinaus vorstehen, also über eine Verringerung der Gewindenuttiefe auf Null hinaus den Gewindescheitel radial überragen. Im Falle einer stufenweisen Abnahme der Gewindenuttiefe kann an jedem in einem Einschraubsinn nachlaufenden Stufenende der Löse-Sicherungsformation eine oben bereits genannte, am Ausbildungsort der Löse-Sicherungsformation quer zum Verlauf der Gewindenut des Sicherungsgewindes sich erstreckende Kante ausgebildet sein.

Die am Ausbildungsort der Löse-Sicherungsformation quer zum Verlauf der Gewindenut des Sicherungsgewindes verlaufende Kante, welche zur Verformung des Gewindescheitels des komplementären Gewindes ausgebildet ist, kann dadurch realisiert sein, dass die Löse-Sicherungsformation in Richtung von dem Einschraubanfang zum Einschraubende auf den Querschnittverringerungsabschnitt folgend einen Querschnittvergrößerungsabschnitt aufweist, in welchem die Gewindenuttiefe im Umfangserstreckungsbereich längs des Gewindenutverlaufs in Richtung vom Einschraubanfang zum Einschraubende stufenweise oder/und kontinuierlich zunimmt.

Die Löse-Sicherungsformation kann zur Realisierung der Verringerung der Querschnittsfläche eine Grenzfläche aufweisen, welche axial bezüglich der Schraubachse des Sicherungsgewindes zwischen Gewindeflanken verläuft, die die Gewindenut begrenzen, wobei sich der radiale Abstand der Grenzfläche von der Schraubachse längs der Umfangserstreckung der Grenzfläche ändert. Bevorzugt grenzt diese Grenzfläche axial beiderseits an die die Gewindenut begrenzen Nutflanken an und erstreckt sich so axial von Nutflanke zu Nutflanke. Hierdurch wird eine vorteilhaft steife Löse-Sicherungsformation erhalten. Die Grenzfläche kann eben sein oder kann bei Blickrichtung radial auf die Gewindenut konkav um eine zum Gewindenutverlauf tangentiale Krümmungsachse gekrümmt sein. Hierdurch wirkt die Grenzfläche bei Kontakt mit einem Gewindescheitel des komplementären Gewindes neutral bzw. den Gewindescheitel bezüglich der Gewindenut axial zentrierend. Alternativ oder zusätzlich kann die Grenzfläche um eine zur Schraubachse parallele Krümmungsachse konvex gekrümmt sein.

Zur Ausbildung der oben bereits erwähnten Kante, welche nach Herstellung des Schraubeingriffs den Gewindevorsprung des komplementären Gewindes vom Gewindescheitel her verformt, insbesondere unter Bildung einer Kerbe verformt, kann die Grenzfläche einen Scheitelbereich bilden, in welchem Querschnittsfläche der Gewindenut längs des Umfangserstreckungsbereichs der Löse-Sicherungsformation minimal ist. Je kürzer der Scheitelbereich in Umfangsrichtung ist, desto höher sind die im Scheitelbereich erzielbaren lokalen Flächenpressungen, welche schließlich die Verformung des Gewindevorsprungs bewirken. Wenngleich also der Scheitelbereich eine Scheitelfläche bilden kann, ist ein lediglich linienhafter Scheitelbereich mit Verlauf quer zum Verlauf des Gewindenutabschnitts, in welchem sich der Scheitelbereich befindet, bevorzugt.

Die Grenzfläche kann in Umfangsrichtung unmittelbar an der Materialschwächung enden. Dann kann die Materialschwächung eine in radialer Richtung abfallende Flanke der Löse-Sicherungsformation ermöglichen, welche radial eine größere Abmessung aufweist als die die Löse-Sicherungsformation aufweisende Gewindenut. Folglich kann die Löse-Sicherungsformation nicht nur eine ausgeprägt spitze Kante mit einem Verlauf quer zum Verlauf des sie tragenden Gewindenutabschnitts bilden, sondern einen radial besonders tiefen Verformungsweg in den Gewindevorsprung des komplementären Gewindes hinein bereitstellen. Die Löse-Sicherungsformation kann so beispielsweise eine Sägezahn-Gestalt aufweisen, deren im Einschraubsinn nachlaufende abfallende Flanke eine größere Radialerstreckung aufweist als die ihr vorauseilende ansteigende Flanke.

Zur Ausübung einer ausreichenden Verformungskraft zur Verformung eines der Materialschwächung in der Sensorhalterung benachbarten Bereichs, insbesondere des oben genannten Verformungsbereichs, kann die Sensorbaugruppe eine Mehrzahl von Löse-Sicherungsformationen aufweisen, welche in einem Gewindegang hintereinander angeordnet sind.

Die hintereinander angeordneten Löse-Sicherungsformationen bewirken bevorzugt eine unterschiedliche Verringerung der Querschnittsfläche der Gewindenut, sodass beispielsweise eine erste beim Einschrauben in Eingriff gelangende Löse-Sicherungsformation eine betragsmäßig kleinere Vorverformung eines durch die Materialschwächung geschwächten Bereichs des Rohrabschnitts bzw. der Sensorhalterung bewirkt und sodass wenigstens eine nachfolgend in Eingriff gelangende Löse-Sicherungsformation eine betragsmäßig größere Verformung bewirkt. Bevorzugt nimmt die von einzelnen Löse-Sicherungsformationen bewirkte Verringerung der Querschnittsfläche der Gewindenut über die Mehrzahl von hintereinander angeordneten und auf denselben Umfangsbereich der Sensorhalterung einwirkenden Löse-Sicherungsformationen hinweg zu, also nimmt die Querschnittsfläche selbst in den Anordnungsbereichen der Löse-Sicherungsformationen ab.

Bevorzugt ist die Mehrzahl von Löse-Sicherungsformationen im Verformungsbereich angeordnet, um den Verformungsbereich möglichst effektiv und sicher beim Einschrauben der Sensorhalterung in den Sensorträger den Verformungsbereich verformend zu verlagern.

Mit dem Ziel, den Verformungsbereich möglichst effektiv und sicher verformend zu verlagern, ist bevorzugt die Löse-Sicherungsformation oder, bei einer Mehrzahl von Löse-Sicherungsformationen mit unterschiedlicher Querschnittsverringerung, diejenige Löse-Sicherungsformation mit der größten Querschnittsverringerung in jenem Gewindenutabschnitt des Verformungsbereichs angeordnet, welcher innerhalb des Verformungsbereichs den größten Abstand von einer kürzesten virtuellen Verbindungslinie aufweist, wobei die virtuelle Verbindungslinie die beiden Enden der den Verformungsbereich einfassenden Materialschwächung mit konstantem radialem Abstand von der Schraubachse des Sicherungsgewindes verbindet. Die beschriebene kürzeste virtuelle Verbindungslinie zwischen den Endbereichen der Materialschwächung ist im Wesentlichen die Biegeachse, um welche der von der Materialschwächung eingefasste Verformungsbereich beim Herstellen des Schraubeingriffs biegend ausgelenkt wird. Je größer der Abstand von der Biegeachse ist, desto geringer ist die für eine vorgegebene Auslenkung benötigte Kraft.

Die Innenausnehmung der Sensorhalterung ist bevorzugt mit derart geringem Spaltmaß relativ zum Sensorgehäuse ausgebildet, dass eine radiale Verlagerung eines durch die Materialschwächung geschwächten Bereichs, insbesondere des Verformungsbereichs, durch Wechselwirkung der wenigstens einen Löse-Sicherungsformation mit dem Gewindevorsprung des komplementären Gewindes, die lichte Weite der Innenausnehmung auf eine Abmessung verringert, welche geringer ist als eine entsprechende Außenabmessung des im Bezugszustand axial mit dem geschwächten Bereich, insbesondere dem Verformungsbereich, überlappenden Abschnitt des in die Innenausnehmung der Sensorhalterung eingesetzten Sensorgehäuses. Dadurch kann beim Einführen des Sensorgehäuses in die Sensorhalterung der durch die wenigstens eine Löse-Sicherungsformation nach radial innen verlagerte Abschnitt der Sensorhalterung zurück nach radial außen gedrängt werden, wodurch eine von der Löse-Sicherungsformation gebildete Kante in den radial gegenüberliegenden Gewindevorsprung des komplementären Gewindes verformend eindringt oder/und der Gewindevorsprung in die Löse-Sicherungsformation eindringt. Das Sensorgehäuse blockiert eine erneute Radialbewegung des vom Sensorgehäuse nach radial außen gedrängten Abschnitts der Sensorhalterung zurück nach radial innen zur virtuellen Schraubachse hin. Dadurch drängt das Sensorgehäuse nicht nur die Löse-Sicherungsformation verformend in den Gewindevorsprung oder/und umgekehrt, sondern hält die Löse-Sicherungsformation und den Gewindevorsprung in der so geschaffenen Eingriffsstellung und sichert so einen durch die beschriebene Verformung geschaffenen Kraft- oder/und Formschlusseingriff zwischen der Löse-Sicherungsformation und dem Gewindevorsprung.

Durch den mittels der Materialschwächung geschwächten Bereich, insbesondere den Verformungsbereich, kann das Sensorgehäuse im Bezugszustand in der Sensorhalterung nur durch Reibschluss klemmend festgelegt sein. Alternativ oder zusätzlich zur Klemmung des Sensorgehäuses in der Sensorhalterung, insbesondere im Rohrabschnitt, kann das Sensorgehäuse eine Festlegeformation aufweisen, welche mit einer Festlegegegenformation in einer Innenausnehmung des Sensorgehäuses, insbesondere an deren Rohrabschnitt, in Festlegeeingriff bringbar ist. Eine Formation aus Festlegeformation und Festlegegegenformation kann dabei ein Radialvorsprung sein und die jeweils andere Formation kann eine den Radialvorsprung aufnehmenden Nut sein, welche als Bajonettverriegelung einen überwiegend oder ausschließlich in axiale Richtung verlaufenden Axialabschnitt und einen daran anschließenden in Umfangsrichtung verlaufenden Umfangsabschnitt aufweist. Alternativ kann die Festlegeformation ein Außengewinde und die Festlegegegenformation ein komplementäres Innengewinde umfassen, bevorzugt ein Feingewinde, wie es bereits aus dem Stand der Technik bekannt ist. Durch eine mit einer Festlegegegenformation kooperierende Festlegeformation kann das Sensorgehäuse örtlich definiert angeordnet und gegen eine Verlagerung relativ zur Sensorhalterung gesichert sein.

Um den Eingriff von Festlegeformation und Festlegegegenformation miteinander möglichst nicht zu stören, ist die Festlegegegenformation bevorzugt axial außerhalb des Anordnungsbereichs der Materialschwächung, insbesondere des Verformungsbereichs, ausgebildet bzw. angeordnet. Bevorzugt ist die Festlegegegenformation in Einführrichtung des Sensorgehäuses in die Sensorhalterung wenigstens abschnittsweise vor der Materialschwächung, insbesondere den Verformungsbereich, angeordnet, sodass ein dem Einführlängsende des Sensorgehäuses näher als die Festlegeformation gelegener Gehäuseabschnitt den geschwächten Bereich der Sensorhalterung nach radial außen drängt. So kann verhindert werden, dass die Festlegeformation an dem geschwächten und in der Regel nach radial innen verlagerten Bereich der Sensorhalterung vorbei bewegt werden muss.

Eine Sensorhalterung weist einen Rohrabschnitt mit einem am Rohrabschnitt ausgebildeten Außengewinde auf, wobei das Außengewinde als Sicherungsgewinde in wenigstens einem Umfangsabschnitt einer Gewindenut eine Löse-Sicherungsformation aufweist. Die Löse-Sicherungsformation verringert, bezogen auf einen von einer Löse-Sicherungsformation freien Umfangsabschnitt der Gewindenut, die Querschnittsfläche der Gewindenut. In einem Schwächungsbereich der Sensorhalterung ist eine Materialschwächung ausgebildet, wobei der Schwächungsbereich das gesamte Außengewinde enthält und axial, bezogen auf eine Schraubachse des Außengewindes, beiderseits des Außengewindes wenigstens das Doppelte der Gewindesteigung des Außengewindes über das Außengewinde hinausreicht. Eine Verlaufsrichtung der Materialschwächung, in welcher die Materialschwächung ihre größte Abmessung aufweist, weist bezüglich der Schraubachse des Außengewindes eine axiale Komponente oder/und eine Komponente in Umfangsrichtung auf, wobei die wenigstens eine Löse-Sicherungsformation im axialen Erstreckungsbereich der Materialschwächung angeordnet ist oder/und im Umfangserstreckungsbereich der Materialschwächung angeordnet ist.

Das oben zur Sensorhalterung in der Beschreibung der Sensorbaugruppe Gesagte gilt selbstverständlich auch für die Sensorhalterung alleine genommen und umgekehrt.

Die Sensorhalterung kann mehr als eine Materialschwächung aufweisen, wobei die Materialschwächungen in Umfangsrichtung um die Schraubachse zueinander versetzt angeordnet sind, um eine möglichst große Vielzahl von radial erleichtert verformbaren Bereichen der Sensorhalterung zu schaffen. Die Sensorhalterung kann daher mehr als einen Verformungsbereich aufweisen, wobei dann die Verformungsbereiche in Umfangsrichtung um die Schraubachse zueinander versetzt angeordnet sind.

Dann, wenn die Sensorhalterung mehr als eine Materialschwächung, insbesondere mehr als einen Verformungsbereich aufweist, ist vorzugsweise jeder Materialschwächung, insbesondere jedem Verformungsbereich wenigstens eine Löse-Sicherungsformation zugeordnet, die im axialen Erstreckungsbereich oder/und im Umfangserstreckungsbereich der jeweiligen Materialschwächung oder/und im Erstreckungsbereich des jeweiligen Verformungsbereichs angeordnet oder ausgebildet ist.

Die vorliegende Erfindung mit nachfolgend anhand der beiliegenden Zeichnungen näher beschrieben werden. Es stellt dar:
- Figur 1: eine Aufrissansicht einer erfindungsgemäßen Ausführungsform einer Sensorhalterung der vorliegenden Anmeldung,
- Figur 2: eine perspektivische Ansicht der Sensorhalterung von Figur 1,
- Figur 3: eine vergrößerte Darstellung des Außengewindes mit Materialschwächung und Löse-Sicherungsformation der Sensorhalterung der Figuren 1 und 2,
- Figur 4: eine Schnittansicht eines Abschnitts eines Sensorträgers einer erfindungsgemäßen Ausführungsform einer Sensorbaugruppe der vorliegenden Anmeldung,
- Figur 5: eine Längsschnittansicht eines Erfassungs- und Einführbereichs eines Sensorgehäuses mit Sensor einer erfindungsgemäßen Ausführungsform einer Sensorbaugruppe der vorliegenden Anmeldung,
- Figur 6: der Sensorträger von Figur 3 mit darin eingeschraubter Sensorhalterung der Figuren 1 und 2, und
- Figur 7: eine Sensorbaugruppe der vorliegenden Anmeldung, umfassend den Sensorträger mit darin eingeschraubter Sensorhalterung von Figur 5 mit in die Sensorhalterung eingeführtem Sensorgehäuse gemäß Figur 4.

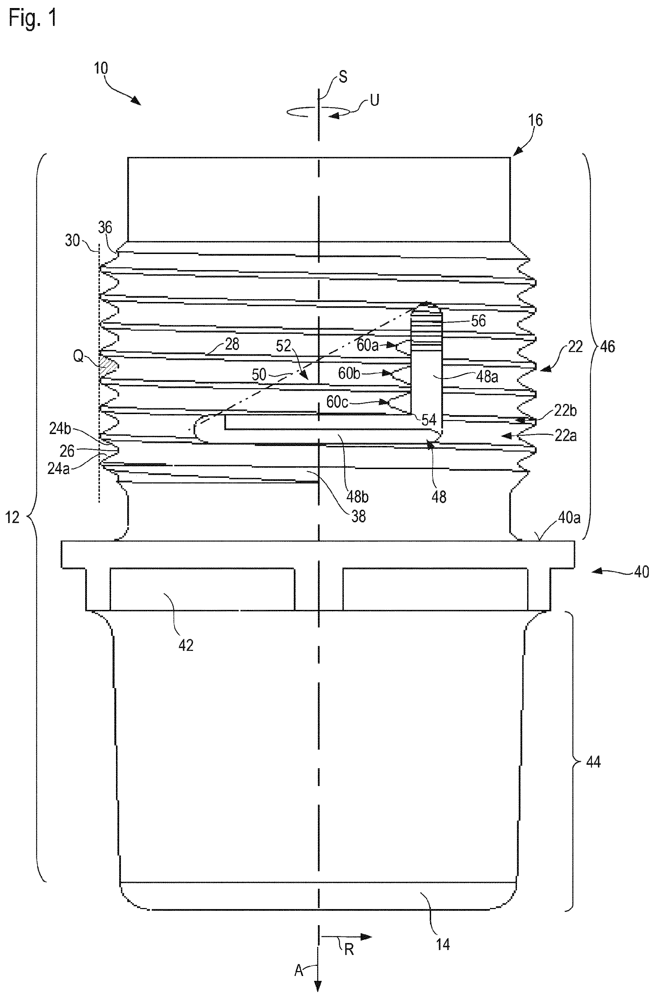

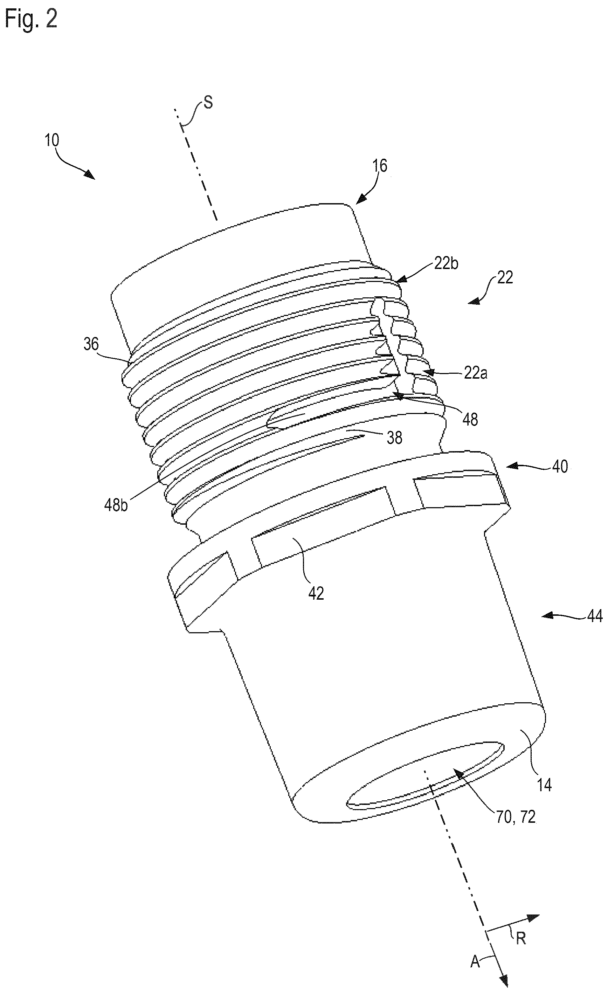

In den Figuren 1 bis 3 ist eine erfindungsgemäße Ausführungsform einer Sensorhalterung der vorliegenden Anmeldung allgemein mit 10 bezeichnet. Die Sensorhalterung 10 erstreckt sich längs einer Schraubachse S. Die Sensorhalterung 10 umfasst einen hohlen, im dargestellten Ausführungsbeispiel zylindrischen Rohrabschnitt 12 und einen den Rohrabschnitt 12 zu einer Seite abschließenden Boden 14.

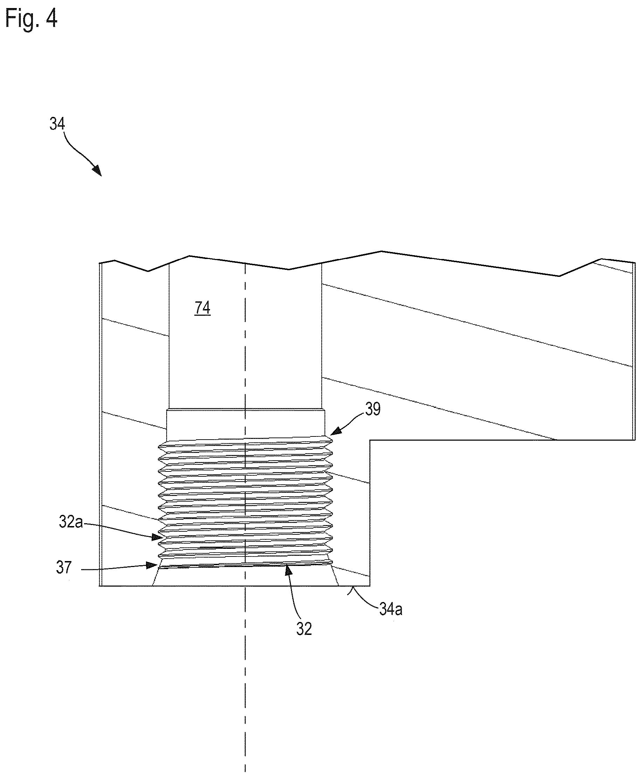

Von seinem dem Boden 14 axial bezüglich der Schraubachse S entgegengesetzten Längsende 16 ist die Sensorhalterung 10 bzw. der Rohrabschnitt 12 offen, sodass ein in Figur 4 gezeigtes Sensorgehäuse 18 mit seinem Einführlängsende 20 vorauseilend in den Rohrabschnitt 12 längs der Schraubachse S in axialer Richtung A eingeführt werden kann.

Die Schraubachse S definiert die axiale Richtung A, zur Schraubachse S orthogonale radiale Richtungen R und eine um die Schraubachse S umlaufende Umfangsrichtung U.

Der Rohrabschnitt 12 weist ein Außengewinde 22 auf, welches im dargestellten Beispiel eingängig ist. Das Außengewinde 22 weist eine Gewindenut 22a auf, wobei axial unmittelbar benachbarte Windungen der Gewindenut 22a zwischen sich einen die Windungen voneinander trennenden Gewindevorsprung 22b bilden.

Wie an der Konturlinie des Außengewindes 22 in Figur 1 zu erkennen ist, ist die Gewindenut 22a axial durch aufeinander zu weisende Nutflanken 24a und 24b begrenzt. Dementsprechend ist der Gewindevorsprung 22b durch voneinander weg weisende Nutflanken 24b und 24a begrenzt.

Die Gewindenut 22a ist nach radial innen durch einen Nutgrund 26 begrenzt. Nach radial außen ist die Gewindenut 22a, wie für Gewinde typisch, offen. Der Gewindevorsprung 22b ist nach radial außen durch einen Gewindescheitel 28 begrenzt.

Das Außengewinde 22 ist an einem zylindrischen Abschnitt des Rohrabschnitts 12 bzw. der Sensorhalterung 10 ausgebildet und weist dadurch eine virtuelle zylindrische Schmiegefläche 30 auf, welche am Gewindescheitel 28 berührend anliegt. Die Schmiegefläche 30, deren Zylinderachse mit der Schraubachse S koaxial ist, ist in Figur 1 lediglich strichliniert angedeutet. Zwischen der Konturlinie des Außengewindes 22 und der Schmiegefläche 30 ist die Querschnittsfläche Q der Gewindenut 22a in einem nachstehend näher erläuterten Löse-Sicherungsformationen freien Gewindenutabschnitt als schraffierte Fläche erkennbar. Sie hat eine grob V-förmige Gestalt. Die in Figur 1 erkennbare Konturlinie liegt in einer die Schraubachse S enthaltenden, zur Zeichenebene der Figur 1 parallelen Ebene.

Das Außengewinde 22 wird von seinem Längsende 16 her in ein Innengewinde 32 eines in Figur 4 in Alleinstellung teilweise gezeigten Sensorträgers 34 eingeschraubt. Das dem Längsende 16 näher gelegene Ende des Außengewindes 22 ist daher sein Einschraubanfang 36. Das entgegengesetzte Ende des Außengewindes 22 ist sein Einschraubende 38. Der Einschraubanfang des Innengewindes ist in Figur 4 mit 37, das Einschraubende mit 39 bezeichnet. Der Sensorträger 34 kann Teil, insbesondere integraler Bestandteil, einer Behälterwand sein, etwa eines Reaktorbehälters oder Bio-Reaktorbehälters.

Der Rohrabschnitt 12 weist im dargestellten Beispiel etwa in seiner Längsmitte einen in Umfangsrichtung vollständig umlaufenden Radialvorsprung 40 auf, dessen zur Schraubachse S orthogonale Anlagefläche 40a als körperlicher Endanschlag der Sensorhalterung 10 im betriebsbereit eingeschraubten Zustand der Sensorhalterung 10 in Anlage an eine Begrenzungsfläche 34a des Sensorträgers 34 gelangt.

An einem vom Außengewinde 22 weiter entfernt gelegenen Axialabschnitt des Radialvorsprungs 40 ist eine Sechskant-Werkzeugeingriffsformation 42 ausgebildet, sodass die Sensorhalterung 10 durch einen Schraubenschlüssel mit herkömmlicher Schlüsselweite in das Innengewinde 32 des Sensorträgers 34 eingeschraubt werden kann. Ein axial auf der vom Außengewinde 22 abgewandten Seite des Radialvorsprungs 40 sich anschließender Auskragabschnitt 44 kragt im fertig montierten betriebsbereiten Zustand der Sensorhalterung 10 zusätzlich zum Radialvorsprung 40 axial von der Begrenzungsfläche 34a des Sensorträgers 34 aus.

Ein Axialbereich des Rohrabschnitts 12, welcher das gesamte Außengewinde 22 sowie axial beiderseits darüber hinaus eine Rohrabschnittslänge von zusätzlich je etwa zwei Gewindesteigungen des Außengewindes 22 aufweist, ist als Schwächungsbereich 46 vorgesehen. In diesem Schwächungsbereich 46 ist eine Materialschwächung 48 als in Dickenrichtung den Rohrabschnitt 12 durchsetzende Nut ausgebildet. Die Materialschwächung 48 weist einen axialen Schenkel 48a und einen in Umfangsrichtung verlaufenden Schenkel 48b auf.

Eine virtuelle Verbindungslinie 50, welche die Längsenden der Materialschwächung 48 miteinander verbindet, bildet eine Biegeachse eines von der Materialschwächung 48 eingefassten Verformungsbereichs 52. Der Verformungsbereich 52 ist im dargestellten Beispiel dreieckig, wobei diese Gestalt lediglich beispielhaft gewählt ist. Die Spitze 54 des dreieckigen Verformungsbereichs 52 weist den größten Abstand von der als Biegeachse wirkenden virtuellen Verbindungslinie 50 auf und ist damit bei vorgegebener radialer Belastung bezüglich seiner unverformten Ausgangsgestalt betragsmäßig radial am stärksten auslenkbar.

Durch den axialen Schenkel 48a ist auf der Innenseite des Rohrabschnitts 12 ein Feingewinde als Innengewinde 56 zu erkennen, in welches das Sensorgehäuse 18 mit seinem am Außenumfang ausgebildeten Außengewinde 58 zur Festlegung des Sensorgehäuses 18 an der Sensorhalterung 10 eingeschraubt werden kann.

Durch den Umfangsschenkel 48b ist diametral gegenüberliegend eine weitere Materialschwächung gleicher Gestalt sichtbar. Die weitere Materialschwächung entspricht der in Figur 1 dem Betrachter zugewandten Materialschwächung 48, um 180° um die Schraubachse S gedreht.

Während also die Materialschwächung 48 an einem beliebigen Ort innerhalb des Schwächungsbereich 46 sinnvoll angeordnet werden kann, ist sie bevorzugt im Erstreckungsbereich des Außengewindes 22 angeordnet.

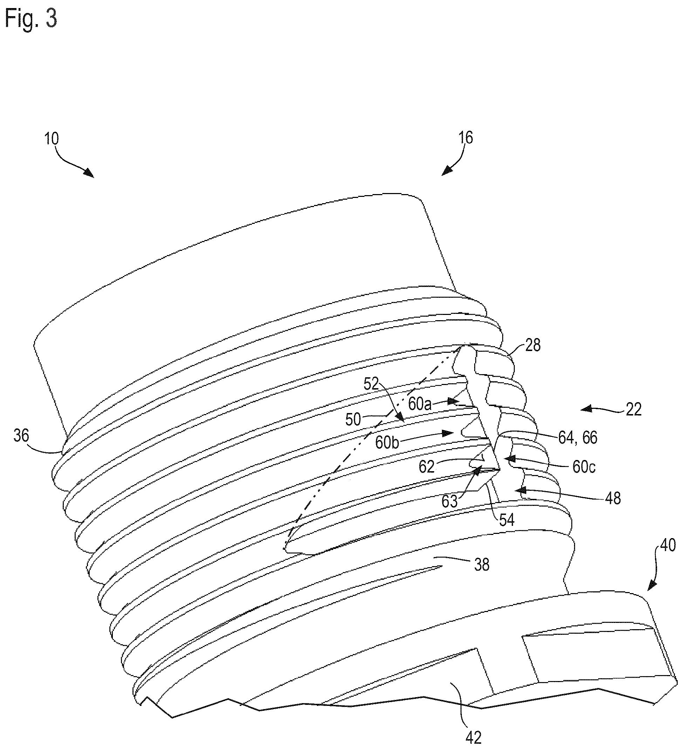

Im Verformungsbereich 52 sind im dargestellten Beispiel insgesamt drei Löse-Sicherungsformationen 60a, 60b und 60c ausgebildet, welche der besseren Übersichtlichkeit wegen nachfolgend in Zusammenschau mit der vergrößerten Darstellung von Figur 3 erläutert werden.

Am Beispiel der größten und damit am deutlichsten erkennbaren Löse-Sicherungsformation 60c lässt sich in Figur 3 erkennen, dass diese eine Materialanhäufung in der Gewindenut 22a ist, wobei die Löse-Sicherungsformation 60c eine zum Einschraubanfang 36 hinweisende Grenzfläche 62 aufweist, welche im dargestellten Beispiel eben, zur Schraubachse S parallel und bezüglich des Verlaufs der Gewindenut 22a in dem die die Löse-Sicherungsformation 60c aufweisenden Abschnitt geneigt ist. Der Umfangserstreckungsbereich der Grenzfläche 62 bildet folglich einen Querschnittsverringerungsabschnitt 63, längs welchem sich in einem Einschraubsinn vom Einschraubanfang 36 zum Einschraubende 38 Querschnittsfläche Q stufenlos verringert. Die Materialanhäufung füllt die Gewindenut 22a vom Nutgrund 26 ausgehend nach radial außen auf, sodass die Grenzfläche 62 bis zum Nutgrund 26 bzw. bis zu den aufeinander zuweisenden Nutflanken 24a und 24b reicht, die den Abschnitt der Gewindenut 22a begrenzen, in welchem die Löse-Sicherungsformation 60c ausgebildet ist.

An ihrem radial äußeren Ende bildet die Löse-Sicherungsformation 60c einen Scheitel 64 in Gestalt einer Kante 66. Die Kante 66 verläuft quer zur Verlaufsrichtung des die Löse-Sicherungsformation 60c aufweisenden Gewindenutabschnitts. Damit verläuft die Kante 66 auch quer zu einem bei hergestelltem Schraubeingriff in die Gewindenut 22a eingreifenden Gewindevorsprung 32a des komplementären Innengewindes 32 des Sensorträgers 34. Ausgehend von dem im Einschraubsinn vorauseilenden Längsende der Grenzfläche 62 in Umfangsrichtung U bis zum Scheitel 64 der Grenzfläche 62 verringert sich die Gewindenuttiefe im Querschnittsverringerungsabschnitt 63 kontinuierlich.

Die Kante 66 bildet einen Teil des Randes des axialen Schenkels 48a der Materialschwächung 48. Eine in den Figuren nicht erkennbare von dem Einschraubanfang weg weisende, d. h. im Einschraubsinn nachlaufende Flanke der Löse-Sicherungsformation 60c bildet eine in Umfangsrichtung weisende Randfläche des axialen Schenkels 48a. Die nachlaufende Flanke der Löse-Sicherungsformation 60c erstreckt sich damit über die gesamte radiale Dicke des Rohrabschnitts 12 im Bereich des Außengewindes 22.

Die Kante 66 verläuft außerdem zwischen axial benachbarten Windungen des Gewindescheitels 28. Dadurch füllt die Löse-Sicherungsformation 60c im Bereich ihres Scheitels 64 die Gewindenut 22a vollständig aus und verringert ihre Querschnittsfläche Q im Bereich des Scheitel 64 bzw. der Kante 66 auf 0.

Für die näher beim Einschraubanfang 36 gelegenen Löse-Sicherungsformationen 60b und 60a gilt das für die Löse-Sicherungsformation 60c Gesagte entsprechend, jedoch mit der Maßgabe, dass deren als Kanten ausgebildete Scheitel radial näher bei der Schraubachse S gelegen sind, sodass die Löse-Sicherungsformationen 60b und 60a die Gewindenut 22a nicht vollständig ausfüllen und damit ihre Querschnittsfläche Q weniger stark verringern als die Löse-Sicherungsformation 60c, wobei die Verringerung der Querschnittsfläche Q umso weniger stark ausfällt, je näher die jeweilige Löse-Sicherungsformation am Einschraubanfang 36 gelegen ist.

Beim Einschrauben der Sensorhalterung 10 in das Innengewinde 32 des Sensorträgers 34 kommen die Löse-Sicherungsformation 60a, 60b und 60c nacheinander in Anlageeingriff mit dem Gewindevorsprung 32a des komplementären Innengewindes 32. Aufgrund der Materialschwächung 48 wird durch diesen Anlageeingriff der Verformungsbereich 52 um die virtuelle Verbindungslinie 50 als Biegeachse biegend nach radial innen verformt, wobei der von der virtuellen Verbindungslinie 50 am weitesten entfernt liegende Punkt 54 des Verformungsbereichs 52 am stärksten ausgelenkt wird. Um diese stärkste Auslenkung des Punktes 54 zu unterstützen, ist die die Querschnittsfläche Q der Gewindenut 22a am stärksten verjüngende Löse-Sicherungsformation 60c dem Punkt 54 von den drei vorhandenen Löse-Sicherungsformationen 60a, 60b und 60c am nächsten gelegen.

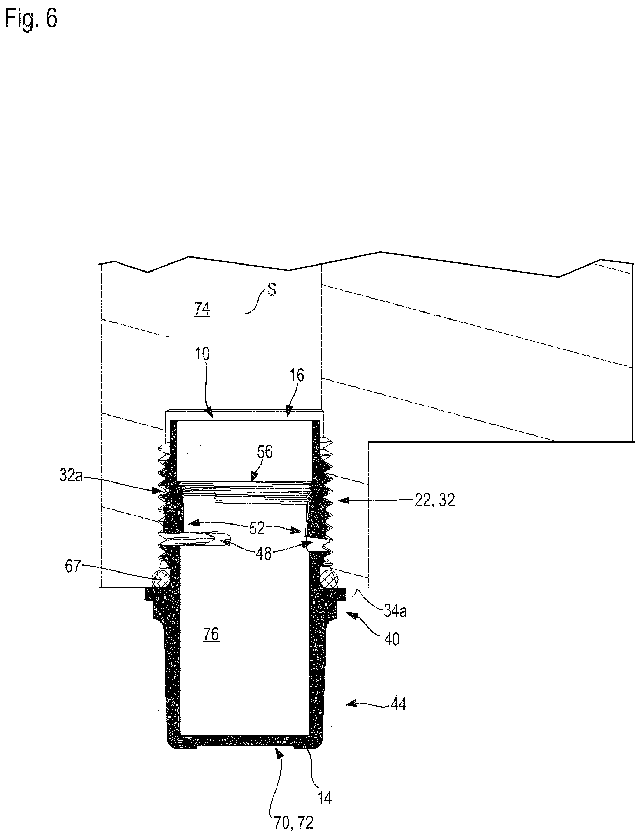

Ein Längsschnitt durch den Sensorträger 34 mit in dessen Innengewinde 32 eingeschraubter Sensorhalterung 10, jedoch noch ohne Sensorgehäuse 18, ist in Figur 6 gezeigt. Dort ist gut zu erkennen, wie der Verformungsbereich 52 durch den Anlageeingriff zwischen den Löse-Sicherungsformationen 60a, 60b und 60c mit dem Gewindevorsprung 32a des komplementären Innengewindes 32 nach radial innen zur Schraubachse S hin verformend verlagert ist. Dies gilt für beide an der Sensorhalterung 10 ausgebildete Verformungsbereiche 52, wobei aufgrund der Lage der Schnittebene von Figur 6 die Verlagerung des in Figur 6 rechten Verformungsbereichs 52 ausgeprägter dargestellt ist.

Die Sensorhalterung 10 ist durch eine O-Ring-Dichtung 67 gegenüber dem Sensorträger 34 abgedichtet.

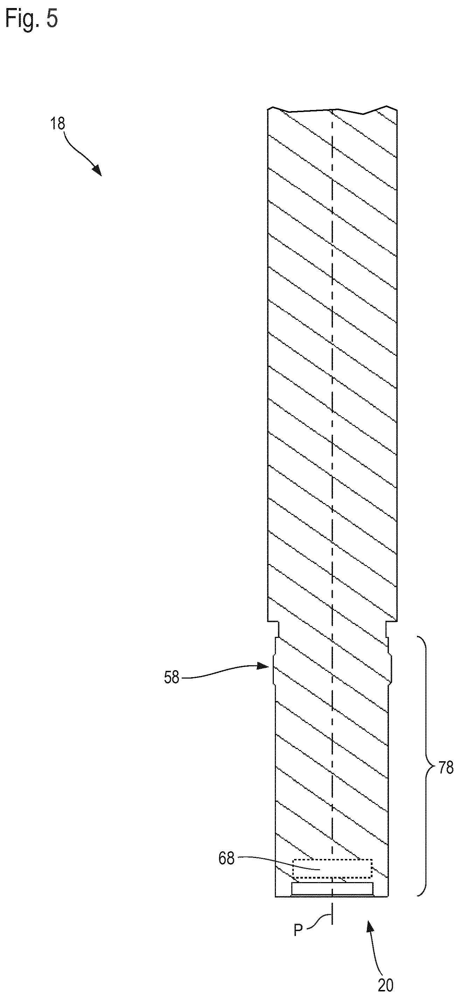

Die Sensorhalterung 10 ist zur Aufnahme des in Figur 5 dargestellten Sensorgehäuses 18 ausgebildet. Das Sensorgehäuse 18 erstreckt sich längs einer Sensorachse P, wobei im Bereich des Einführlängsendes 20 ein Sensor 68 angeordnet ist, beispielsweise ein nach dem Prinzip der Luminiszenzlöschung arbeitender optischer Sensor zur Ermittlung eines Sauerstoffgehalts eines in dem Behälter, dessen Teil der Sensorträger 34 ist, aufgenommenen Mediums. Damit das Medium, dessen Sauerstoffgehalt ermittelt werden soll, das Luminophor des Sensors 68 erreicht, ist im Boden 14 der Sensorhalterung eine mit einer sauerstoffdurchlässigen, vorzugsweise jedoch flüssigkeitsundurchlässigen oder/und erforderlichenfalls dampfundurchlässigen Membran 70 bedeckte Öffnung 72 ausgebildet.

Das Sensorgehäuse 18 mit dem Sensor 68 in Figur 5 ist lediglich grob-schematisch dargestellt. Es ist mit Ausnahme der Ausbildung des Feingewindes 58 zumindest in dem in Figur 4 gezeigten Bereich aus koaxialen zylindrischen Abschnitten zusammengesetzt, welche jeweils die Sensorachse P als Zylinderachse aufweisen.

Eine Durchgangsöffnung 74 des Sensorträgers 34, in welcher das Innengewinde 32 zum Schraubeingriff mit dem Außengewinde 22 ausgebildet ist, durchsetzt den Sensorträger 34 vollständig.

Die Sensorhalterung 10 und das Sensorgehäuse 18 werden von entgegengesetzten Seiten her in die Durchgangsöffnung 74 des Sensorträgers 34 eingeführt. Ausgehend von dem in Figur 6 gezeigten Zustand eines hergestellten Schraubeingriffs zwischen nur der Sensorhalterung 10 und dem Sensorträger 34 wird das Sensorgehäuse 18 mit zur Schraubachse S koaxialer Sensorachse P von der Außenseite des Sensorträgers 34 her in die Durchgangsöffnung 74 und in die in den Sensorträger 34 eingeschraubte Sensorhalterung 10 eingeführt.

Die lichte Weite der Innenausnehmung 76 der Sensorhalterung 10 ist im unverformten Zustand der Sensorhalterung 10 nur geringfügig größer als der Außendurchmesser des in die Sensorhalterung 10 eingeführten Sensorabschnitts 78.

Dann, wenn der Verformungsbereich 52 in der oben beschriebenen Weise nach radial innen zur Schraubachse S hin verformt ist, ist die lichte Weite der Innenausnehmung 76 im Erstreckungsbereich des Verformungsbereichs 52 geringer als der Außendurchmesser des Sensorgehäuses 18, sodass beim Einführen des Sensorgehäuses 18 in die Sensorhalterung 10 der durch die Löse-Sicherungsformationen 60a, 60b, 60c nach radial innen verlagerte Verformungsbereich 52 durch das Sensorgehäuse 18 körperlich nach radial außen in Richtung von der Schraubachse S weg gedrängt wird.

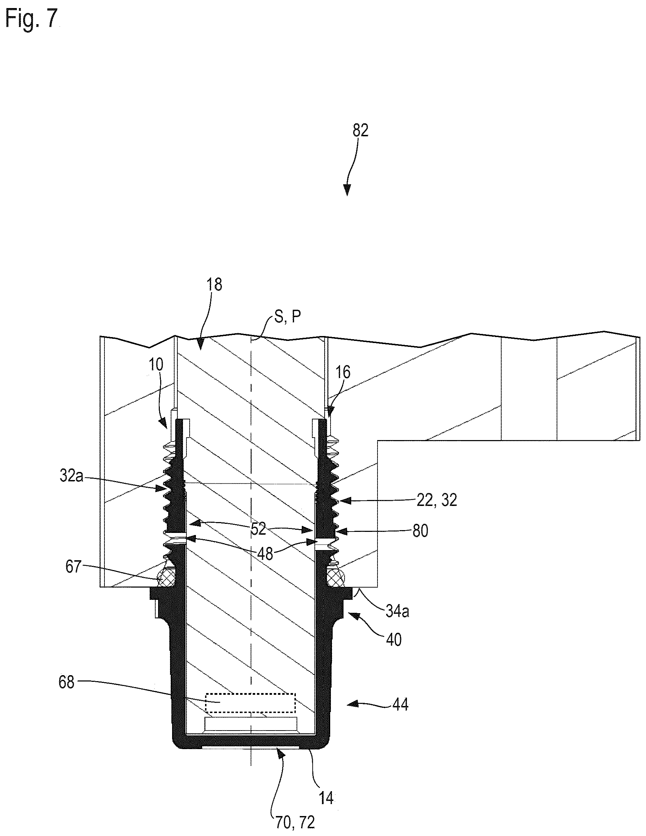

Dadurch werden die Kanten 66 der Löse-Sicherungsformationen 60a, 60b und 60c in den Gewindevorsprung 32a des komplementären Innengewindes 32 gedrängt, wo sie selbst als Spritzgussbauteilabschnitte gegenüber einem Gewindevorsprung 32a zumindest ein Stück weit durch Verdrängung des Gewindescheitels des Gewindevorsprungs 32a in den Gewindevorsprung 32a eindringen und eine Ausnehmung 80 in Gestalt einer Kerbe bilden. Diese Situation ist in Figur 7 dargestellt, die eine Sensorbaugruppe 82 mit den Komponenten Sensorgehäuse 18, Sensorhalterung 10 und Sensorträger 34 zeigt. Da das in die Sensorhalterung 10 eingeführte Sensorgehäuse 18 eine körperliche Blockade der Verformungsbereiche 52 bildet, verbleiben die Löse-Sicherungsformationen 60a, 60b und 60c in den von ihnen selbst geschaffenen Ausnehmungen 80 im Gewindevorsprung 32a und verhindern so ein Herausdrehen der Sensorhalterung 10 aus dem Sensorträger 34.

Wenn also das Sensorgehäuse 18 wieder aus der Sensorhalterung 10 herausgedreht wird, wird auf das einzig zugängliche, dem Sensor 68 fernliegende Längsende des Sensorgehäuses 18 ein Drehmoment in einem Lösesinn ausgeübt. Durch die zwischen den beteiligten Bauteilen: Sensorgehäuse 18, Sensorhalterung 10 und Sensorträger 34 unvermeidlich auftretende Reibung wird somit auch ein Drehmoment im Lösesinn auf die Sensorhalterung 10 relativ zum Sensorträger 34 ausgeübt. Das reibschlüssig zur Sensorhalterung 10 übertragene Lösemoment kann den durch die nach radial außen gedrängten Löse-Sicherungsformationen 60a, 60b und 60c zwangsweise erzielten Formschlusseingriff zwischen diesen und dem Gewindevorsprung 32a nicht überwinden, sodass das Sensorgehäuse 18 nach Gebrauch sicher aus der Sensorhalterung 10 demontiert werden kann.

## Patentansprüche

1. Sensorbaugruppe (82), umfassend wenigstens drei gesondert voneinander ausgebildete Bauteile, nämlich ein sich längs einer Sensorachse (P) erstreckendes Sensorgehäuse (18) mit einem darin aufgenommenen Sensor (68), eine Sensorhalterung (10) und einen Sensorträger (34), wobei das Sensorgehäuse (18) in einem für einen Erfassungsbetrieb des Sensors (68) bereiten Bezugszustand der Sensorbaugruppe (82) unter Zwischenanordnung der Sensorhalterung (10) am Sensorträger (34) gehaltert ist, wobei die Sensorhalterung (10) einen Rohrabschnitt (12) mit einem Außengewinde (22) aufweist, welches mit einem Innengewinde (32) des Sensorträgers (34) längs einer Schraubachse (S) in Schraubeingriff ist, wobei die Schraubachse (S) eine längs der Schraubachse (S) verlaufende axiale Richtung (A), orthogonal zur Schraubachse (S) verlaufende radiale Richtungen (R) und eine um die Schraubachse (S) herum verlaufende Umfangsrichtung (U) definiert, wobei der Rohrabschnitt (12) das Sensorgehäuse (18) in Umfangsrichtung (U) umgibt,
**dadurch gekennzeichnet, dass** wenigstens ein Gewinde (22) aus dem Außengewinde (22) der Sensorhalterung (10) und dem Innengewinde (32) des Sensorträgers (34) als Sicherungsgewinde (22) in wenigstens einem Umfangsabschnitt einer Gewindenut (22a) eine Löse-Sicherungsformation (60a, 60b, 60c) aufweist, wobei die Löse-Sicherungsformation (60a, 60b, 60c), bezogen auf einen von der Löse-Sicherungsformation (60a, 60b, 60c) freien Umfangsabschnitt der Gewindenut (22a), die Querschnittsfläche (Q) der Gewindenut (22a) lokal in dem wenigstens einem Umfangsabschnitt verringert.

2. Sensorbaugruppe (82) nach Anspruch 1,
**dadurch gekennzeichnet, dass** eine Formation aus
a.) der Löse-Sicherungsformation (60a, 60b, 60c) und
b.) einem im Bezugszustand der Sensorbaugruppe (82) im Umfangserstreckungsbereich und im Axialerstreckungsbereich der Löse-Sicherungsformation (60a, 60b, 60c) gelegenen Gewindevorsprungsabschnitt des mit dem Sicherungsgewinde (22) in Schraubeingriff stehenden anderen Gewindes aus Außengewinde (22) der Sensorhalterung (10) und Innengewinde (32) des Sensorträgers (34) härter oder/und steifer ausgebildet ist als die jeweils andere Formation.

3. Sensorbaugruppe (82) nach Anspruch 1 oder 2,
**dadurch gekennzeichnet, dass** in einem Schwächungsbereich (46) der Sensorhalterung (10) eine Materialschwächung (48) ausgebildet ist, wobei der Schwächungsbereich (46) das gesamte Außengewinde (22) enthält und axial, bezogen auf eine Schraubachse (S) des Außengewindes (22), beiderseits des Außengewindes (22) wenigstens das Doppelte der Gewindesteigung des Außengewindes (22) über das Außengewinde (22) hinausreicht.

4. Sensorbaugruppe (82) nach Anspruch 3,
**dadurch gekennzeichnet, dass** die Materialschwächung (48) eine in einer Oberfläche der Sensorhalterung (10) ausgebildete konkave Vertiefung umfasst, welche sich in Dickenrichtung ausgehend von der Oberfläche in die Sensorhalterung (10) hinein erstreckt, wobei die Materialschwächung (48) eine in einer zur Dickenrichtung orthogonalen Breitenrichtung zu messende Breite aufweist, wobei die Materialschwächung (48) längs einer sowohl zur Dickenrichtung als auch zur Breitenrichtung orthogonalen Verlaufsrichtung ihre größte Abmessung aufweist.

5. Sensorbaugruppe (82) nach Anspruch 4,
**dadurch gekennzeichnet, dass** die Materialschwächung (48) die Sensorhalterung (10) in Dickenrichtung durchsetzt.

6. Sensorbaugruppe (82) nach Anspruch 4 oder 5,
**dadurch gekennzeichnet, dass** die Verlaufsrichtung der Materialschwächung (48) eine bezüglich der Schraubachse (S) des Außengewindes (22) axiale Komponente (48a) aufweist, wobei die wenigstens eine Löse-Sicherungsformation (60a, 60b, 60c) im Bezugszustand der Sensorbaugruppe (82) im axialen Erstreckungsbereich der Materialschwächung (48) angeordnet ist, oder/und die Verlaufsrichtung der Materialschwächung (48) bezüglich der Schraubachse (S) des Außengewindes (22) eine Komponente (48b) in Umfangsrichtung (U) aufweist, wobei die wenigstens eine Löse-Sicherungsformation (60a, 60b, 60c) im Bezugszustand der Sensorbaugruppe (10) im Umfangserstreckungsbereich der Materialschwächung (48) angeordnet ist.

7. Sensorbaugruppe (82) nach Anspruch 6,
**dadurch gekennzeichnet, dass** sich die Verlaufsrichtung der in Verlaufsrichtung zusammenhängend ausgebildeten Materialschwächung (48) längs ihres Verlaufs ändert, sodass die Materialschwächung (48) einen Verformungsbereich (52) der Sensorhalterung (10) einfasst, wobei die wenigstens eine Löse-Sicherungsformation (60a, 60b, 60c) im Verformungsbereich (52) angeordnet ist.

8. Sensorbaugruppe (82) nach den einem der vorhergehenden Ansprüche,
**dadurch gekennzeichnet, dass** die Löse-Sicherungsformation (60a, 60b, 60c) in der Gewindenut (22a) des Sicherungsgewindes (22) über einen vorbestimmten Umfangserstreckungsbereich eine, verglichen mit einem von einer Löse-Sicherungsformation (60a, 60b, 60c) freien Gewindenutabschnitt, geringere Gewindenuttiefe aufweist.

9. Sensorbaugruppe (82) nach Anspruch 8,
**dadurch gekennzeichnet, dass** die Löse-Sicherungsformation (60a, 60b, 60c) einen Querschnittverringerungsabschnitt (63) aufweist, in welchem die Gewindenuttiefe im Umfangserstreckungsbereich längs des Gewindenutverlaufs in Richtung von einem Einschraubanfang (36) zu einem Einschraubende (38) des Sicherungsgewindes (22) bezüglich eines Einschraubvorgangs der Sensorhalterung (10) in den Sensorträger (34) stufenweise oder/und kontinuierlich abnimmt.

10. Sensorbaugruppe (82) nach Anspruch 9,
**dadurch gekennzeichnet, dass** die Löse-Sicherungsformation (60a, 60b, 60c) in Richtung von dem Einschraubanfang (36) zum Einschraubende (38) auf den Querschnittverringerungsabschnitt (63) folgend einen Querschnittvergrößerungsabschnitt aufweist, in welchem die Gewindenuttiefe im Umfangserstreckungsbereich in Richtung vom Einschraubanfang (36) zum Einschraubende (38) stufenweise oder/und kontinuierlich zunimmt.

11. Sensorbaugruppe (82) nach einem der Ansprüche 8 bis 10,
**dadurch gekennzeichnet, dass** die Löse-Sicherungsformation (60a, 60b, 60c) eine Grenzfläche (62) aufweist, welche axial bezüglich der Schraubachse (S) des Sicherungsgewindes (22) zwischen Gewindeflanken (24a, 24b) verläuft, die die Gewindenut (22a) begrenzen, wobei sich der radiale Abstand der Grenzfläche (62) von der Schraubachse (S) längs der Umfangserstreckung der Grenzfläche (62) ändert.

12. Sensorbaugruppe (82) nach Anspruch 11,
**dadurch gekennzeichnet, dass** die Grenzfläche (62) einen Scheitelbereich (64) bildet, in welchem die Querschnittsfläche (Q) der Gewindenut (22a) längs des Umfangserstreckungsbereichs der Löse-Sicherungsformation (60a, 60b, 60c) minimal ist.

13. Sensorbaugruppe (82) nach den einem der vorhergehenden Ansprüche,
**dadurch gekennzeichnet, dass** sie eine Mehrzahl von Löse-Sicherungsformationen (60a, 60b, 60c) aufweist, welche in einem Gewindegang hintereinander angeordnet sind.

14. Sensorbaugruppe (82) nach Anspruch 13,
**dadurch gekennzeichnet, dass** die hintereinander angeordneten Löse-Sicherungsformationen (60a, 60b, 60c) eine unterschiedliche Verringerung der Querschnittsfläche (Q) der Gewindenut (22a) bewirken.

15. Sensorbaugruppe (82) nach Anspruch 13 oder 14, unter Einbeziehung des Anspruchs 7,
**dadurch gekennzeichnet, dass** die Mehrzahl von Löse-Sicherungsformationen (60a, 60b, 60c) im Verformungsbereich (52) angeordnet sind.

16. Sensorbaugruppe (82) nach einem der Ansprüche 7 bis 15, unter Einbeziehung des Anspruchs 7,
**dadurch gekennzeichnet, dass** die Löse-Sicherungsformation (60a, 60b, 60c) oder, bei einer Mehrzahl von Löse-Sicherungsformationen (60a, 60b, 60c), diejenige Löse-Sicherungsformation (60c) mit der größten Querschnittsverringerung in jenem Gewindenutabschnitt des Verformungsbereichs (52) angeordnet ist, welcher innerhalb des Verformungsbereichs (52) den größten Abstand von einer kürzesten virtuellen Verbindungslinie (50) aufweist, wobei die virtuelle Verbindungslinie (50) die beiden Enden der den Verformungsbereich (52) einfassenden Materialschwächung (48) mit konstantem radialem Abstand von der Schraubachse (S) des Sicherungsgewindes (22) verbindet.

## Claims

1. A Sensor assembly (82), comprising at least three components formed separately from one another, namely a sensor housing (18) extending along a sensor axis (P) with a sensor (68) accommodated therein, a sensor bracket (10) and a sensor carrier (34), the sensor housing (18), in a reference state of the sensor assembly (82) ready for a detection operation of the sensor (68), being held on the sensor carrier (34) with the sensor bracket (10) being arranged in between, the sensor bracket (10) having a pipe section (12) with an external thread (22) which is in screw engagement with an internal thread (32) of the sensor carrier (34) along a screw axis (S), the screw axis (S) defining an axial direction (A) running along the screw axis (S), radial directions (R) extending orthogonally to the screw axis (S) and a circumferential direction (U) extending around the screw axis (S), wherein the pipe section (12) surrounds the sensor housing (18) in the circumferential direction (U),
**characterized in that** at least one thread (22) of the external thread (22) of the sensor bracket (10) and the internal thread (32) of the sensor carrier (34) as a locking thread (22) has a release-locking formation (60a, 60b, 60c), wherein the release-locking formation (60a, 60b, 60c), in relation to a circumferential section of the thread groove (22a) which is free from the release-locking formation (60a, 60b, 60c), reduces the cross-sectional area (Q) of the thread groove (22a) locally in the at least one circumferential section.

2. Sensor assembly (82) according to claim 1,
**characterized in that** one formation of
a.) the release-locking formation (60a, 60b, 60c) and
b.) a thread projection section, which in the reference state of the sensor assembly (82) is located in the circumferential extension region and in the axial extension region of the release-locking formation (60a, 60b, 60c), of the other thread of the external thread (22) of the sensor bracket (10) and internal thread (32) of the sensor carrier (34), which thread is in screwing engagement with the locking thread (22), is harder or/and stiffer than the respective other formation.

3. Sensor assembly (82) according to claim 1 or 2,
**characterized in that** a material weakening (48) is formed in a weakening region (46) of the sensor bracket (10), the weakening region (46) containing the entire external thread (22) and extending axially, in relation to a screw axis (S) of the external thread (22), at least twice the thread pitch of the external thread (22) over the external thread (22) on both sides of the external thread (22).

4. Sensor assembly (82) according to claim 3,
**characterized in that** the material weakening (48) comprises a concave depression formed in a surface of the sensor bracket (10), which depression extends in the thickness direction starting from the surface into the sensor bracket (10), the material weakening (48) having a width to be measured in a width direction orthogonal to the thickness direction, the material weakening (48) having its largest dimension along a direction of extension orthogonal to both the thickness direction and the width direction.

5. Sensor assembly (82) according to claim 4,
**characterized in that** the material weakening (48) passes through the sensor bracket (10) in the thickness direction.

6. Sensor assembly (82) according to claim 4 or 5,
**characterized in that** the direction of extension of the material weakening (48) has an axial component (48a) with respect to the screw axis (S) of the external thread (22), the at least one release-locking formation (60a, 60b, 60c), in the reference state of the sensor assembly (82), being arranged in the axial extension region of the material weakening (48) or/and the direction of extension of the material weakening (48), with respect to the screw axis (S) of the external thread (22), having a component (48b) in the circumferential direction (U), wherein the at least one release-locking formation (60a, 60b, 60c), in the reference state of the sensor assembly (10), is arranged in the circumferential extension region of the material weakening (48).

7. Sensor assembly (82) according to claim 6,
**characterized in that** the direction of extension of the material weakening (48), which is formed to be continuous in the direction of extension, changes along its extension, so that the material weakening (48) encloses a deformation region (52) of the sensor bracket (10), wherein the at least one release-locking formation (60a, 60b, 60c) is arranged in the deformation region (52).

8. Sensor assembly (82) according to any one of the preceding claims,
**characterized in that** the release-locking formation (60a, 60b, 60c) over a predetermined circumferential extension range has a smaller thread groove depth in the thread groove (22a) of the locking thread (22) compared to a thread groove section free of a release-locking formation (60a, 60b, 60c).

9. Sensor assembly (82) according to claim 8,
**characterized in that** the release-locking formation (60a, 60b, 60c) has a cross-section reduction section (63) in which the thread groove depth decreases gradually and/or continuously in the circumferential extension region along the extension of the thread groove in the direction from a screw-in start (36) to a screw-in end (38) of the locking thread (22) with respect to a screw-in process of the sensor bracket (10) into the sensor carrier (34).

10. Sensor assembly (82) according to claim 9,
**characterized in that** the release-locking formation (60a, 60b, 60c) has, in the direction from the screw-in start (36) to the screw-in end (38), following the cross-section reduction section (63), a cross-section enlargement section in which the thread depth in the circumferential extension region increases stepwise or/and continuously in the direction from the screw-in start (36) to the screw-in end (38).

11. Sensor assembly (82) according to one of claims 8 to 10,
**characterized in that** the release-locking formation (60a, 60b, 60c) has a boundary surface (62) which extends axially with respect to the screw axis (S) of the locking thread (22) between thread flanks (24a, 24b) which confine the thread groove (22a), the radial distance of the boundary surface (62) from the screw axis (S) changing along the circumferential extent of the boundary surface (62).

12. Sensor assembly (82) according to claim 11,
**characterized in that** the boundary surface (62) forms an apex region (64) in which the cross-sectional area (Q) of the thread groove (22a) along the circumferential extension region of the release-locking formation (60a, 60b, 60c) is minimal.

13. Sensor assembly (82) according to any one of the preceding claims,
**characterized in that** it comprises a plurality of release-locking formations (60a, 60b, 60c) which are arranged one behind the other in a thread.

14. Sensor assembly (82) according to claim 13,
**characterized in that** the release-locking formations (60a, 60b, 60c) arranged one behind the other cause a different reduction in the cross-sectional area (Q) of the thread groove (22a).

15. Sensor assembly (82) according to claim 13 or 14, including claim 7,
**characterized in that** the plurality of release-locking formations (60a, 60b, 60c) are arranged in the deformation area (52).

16. Sensor assembly (82) according to any one of claims 7 to 15, including claim 7,
**characterized in that** the release-locking formation (60a, 60b, 60c) or, in the case of a plurality of release-locking formations (60a, 60b, 60c), that release-locking formation (60c) with the largest cross-sectional reduction is arranged **in that** thread groove portion of the deformation region (52) which has the greatest distance from a shortest virtual connecting line (50) within the deformation region (52), the virtual connecting line (50) connecting both ends of the material weakening (48) enclosing the deformation region (52) at a constant radial distance from the screw axis (S) of the locking thread (22).

## Revendications

1. Ensemble capteur (82) comprenant au moins trois composants réalisés séparément les uns des autres, à savoir un boîtier de capteur (18) s'étendant le long d'un axe de capteur (P) et contenant un capteur (68), un support de capteur (10) et un porte-capteur (34), le boîtier de capteur (18) étant maintenu dans un état de référence du ensemble capteur (82) prêt pour un fonctionnement de détection du capteur (68), avec interposition du support de capteur (10) sur le porte-capteur (34), le support de capteur (10) présentant une section tubulaire (12) avec un filetage extérieur (22) qui est en prise par vissage avec un filetage intérieur (32) du porte-capteur (34) le long d'un axe de vissage (S), l'axe de vissage (S) définissant une direction axiale (A) s'étendant le long de l'axe de vissage (S), des directions radiales (R) s'étendant orthogonalement à l'axe de vissage (S) et une direction circonférentielle (U) s'étendant autour de l'axe de vissage (S), la section de tube (12) entourant le boîtier de capteur (18) dans la direction circonférentielle (U),
**caractérisé en ce qu'**au moins un filetage (22) formé par le filetage extérieur (22) de la support de capteur (10) et le filetage intérieur (32) du porte-capteur (34) en tant que filetage de sécurité (22) dans au moins une partie périphérique d'une rainure filetée (22a) présente une formation anti-desserrage (60a, 60b, 60c) , la formation de sécurité anti-desserrage (60a, 60b, 60c), rapportée à une partie périphérique de la rainure filetée (22a) libre de la formation de sécurité anti-desserrage (60a, 60b, 60c), réduissant localement la surface de section transversale (Q) de la rainure filetée (22a) dans au moins une partie périphérique de la rainure filetée (22a).

2. Ensemble capteur (82) selon la revendication 1,
**caractérisé en ce qu'**une formation constituée de
a.) la formation anti-desserrage (60a, 60b, 60c) et
b.) une partie filetée en saillie située, dans l'état de référence de l'ensemble capteur (82), dans la zone d'extension périphérique et dans la zone d'extension axiale de la formation de sécurité anti-desserrage (60a, 60b, 60c) de l'autre filetage formé par le filetage de sécurité (22) en prise par vissage avec le filetage extérieur (22) du support de capteur (10) et le filetage intérieur (32) du porte-capteur (34),
est plus dure et/ou plus rigide que l'autre formation.

3. Ensemble capteur (82) selon la revendication 1 ou 2,
**caractérisé en ce que** dans une zone d'affaiblissement (46) du support de capteur (10) est formé un affaiblissement de matériau (48), la zone d'affaiblissement (46) contenant l'ensemble du filetage extérieur (22) et s'étendant axialement, rapporté à un axe de vissage (S) du filetage extérieur (22), aux deux côtés du filetage extérieur (22) sur au moins le double du pas du filetage extérieur (22) au-delà du filetage extérieur (22).

4. Ensemble capteur (82) selon la revendication 3,
**caractérisé en ce que** l'affaiblissement de matériau (48) comprend un renfoncement concave formé dans une surface du support de capteur (10), qui s'étend dans le sens de l'épaisseur à partir de la surface dans le support de capteur (10), l'affaiblissement de matériau (48) présentant une largeur à mesurer dans une direction de largeur orthogonale à la direction d'épaisseur, l'affaiblissement de matériau (48) présentant sa plus grande dimension le long d'une direction d'extension orthogonale à la fois à la direction d'épaisseur et à la direction de largeur.

5. Ensemble capteur (82) selon la revendication 4,
**caractérisé en ce que** l'affaiblissement du matériau (48) traverse le support de capteur (10) dans le sens de l'épaisseur.

6. Ensemble capteur (82) selon la revendication 4 ou 5,
**caractérisé en ce que** la direction de l'affaiblissement du matériau (48) présente une composante axiale (48a) par rapport à l'axe de vis (S) du filetage extérieur (22), la au moins une formation de sécurité anti-desserrage (60a, 60b, 60c) étant disposée, dans l'état de référence de l'ensemble capteur (82), dans la zone d'extension axiale de l'affaiblissement du matériau (48), et/ou la direction d'extension de l'affaiblissement du matériau (48) présente, par rapport à l'axe de vissage (S) du filetage extérieur (22), une composante (48b) dans la direction circonférentielle (U), la au moins une formation anti-desserrage (60a, 60b, 60c) étant disposée, dans l'état de référence du ensemble capteur (10), dans la zone d'extension périphérique de l'affaiblissement de matière (48).

7. Ensemble capteur (82) selon la revendication 6,
**caractérisé en ce que** la direction d'extension de l'affaiblissement de matériau (48) formé de manière continue dans la direction d'extension change le long de son extension, de sorte que l'affaiblissement de matériau (48) entoure une zone de déformation (52) du support de capteur (10), la au moins une formation de sécurité anti-détachement (60a, 60b, 60c) étant disposée dans la zone de déformation (52).

8. Ensemble capteur (82) selon l'une des revendications précédentes,
**caractérisé en ce que** la formation de sécurité anti-desserrage (60a, 60b, 60c) présente, dans la rainure filetée (22a) du filetage de sécurité (22), sur une zone périphérique prédéterminée, une profondeur de rainure filetée inférieure à celle d'une section de rainure filetée libre d'une formation de sécurité anti-desserrage (60a, 60b, 60c).

9. Ensemble capteur (82) selon la revendication 8,
**caractérisé en ce que** la formation de sécurité anti-desserrage (60a, 60b, 60c) présente une section de réduction de section transversale (63) dans laquelle la profondeur de la rainure filetée diminue par paliers et/ou de manière continue dans la zone d'extension périphérique le long du tracé de la rainure filetée, dans la direction allant d'un début de vissage (36) vers une extrémité de vissage (38) du filetage de sécurité (22) par rapport à un processus de vissage du support de capteur (10) dans le porte-capteur (34).

10. Ensemble capteur (82) selon la revendication 9,
**caractérisé en ce que** la formation de sécurité anti-desserrage (60a, 60b, 60c) présente, dans la direction allant du début de vissage (36) vers l'extrémité de vissage (38), à la suite de la partie de réduction de section transversale (63), une partie d'augmentation de section transversale dans laquelle la profondeur de rainure du filetage augmente par paliers ou/et de manière continue dans la zone d'extension circonférentielle dans la direction allant du début de vissage (36) vers l'extrémité de vissage (38).

11. Ensemble capteur (82) selon l'une des revendications 8 à 10,
**caractérisé en ce que** la formation de sécurité anti-desserrage (60a, 60b, 60c) présente une surface limite (62) qui s'étend axialement par rapport à l'axe de vissage (S) du filetage de sécurité (22) entre des flancs de filetage (24a, 24b) qui délimitent la rainure filetée (22a), la distance radiale entre la surface limite (62) et l'axe de vis (S) variant le long de l'étendue périphérique de la surface limite (62).

12. Ensemble capteur (82) selon la revendication 11,
**caractérisé en ce que** la surface limite (62) forme une zone de sommet (64) dans laquelle la surface de section transversale (Q) de la rainure filetée (22a) est minimale le long de la zone d'extension périphérique de la formation de sécurité anti-desserrage (60a, 60b, 60c).

13. Ensemble capteur (82) selon l'une des revendications précédentes,
**caractérisé en ce qu'**il comporte une pluralité de formations anti-desserrage (60a, 60b, 60c) qui sont disposées les unes derrière les autres dans un filetage.

14. Ensemble capteur (82) selon la revendication 13,
**caractérisé en ce que** les formations anti-démontage (60a, 60b, 60c) disposées les unes derrière les autres provoquent une réduction différente de la surface transversale (Q) de la rainure filetée (22a).

15. Ensemble capteur (82) selon la revendication 13 ou 14, en incluant la revendication 7,
**caractérisé en ce que** la pluralité de formations de sécurité anti-desserrage (60a, 60b, 60c) sont disposées dans la zone de déformation (52).

16. Ensemble capteur (82) selon l'une des revendications 7 à 15, en incluant la revendication 7,
**caractérisé en ce que** la formation de sécurité anti-desserage (60a, 60b, 60c) ou, dans le cas de plusieurs formations de sécurité anti-desserrage (60a, 60b, 60c), la formation de sécurité anti-desserrage (60c) présentant la plus grande réduction de section transversale est disposée dans la partie de rainure de filetage de la zone de déformation (52) qui présente, à l'intérieur de la zone de déformation (52), la plus grande distance par rapport à une ligne de connexion virtuelle la plus courte (50), la ligne de connexion virtuelle (50) connectant les deux extrémités de l'affaiblissement de matériau (48) entourant la zone de déformation (52) à une distance radiale constante de l'axe de vissage (S) du filetage de sécurité (22).
